# EUROPEAN PATENT SPECIFICATION

(11) **EP 3 306 215 B1**
(45) Date of publication and mention of the grant of the patent: **27.12.2023**
(21) Application number: 15894179.9
(22) Date of filing: 02.06.2015
(51) Int. Cl.: F24F 5/00, F25B 13/00

(54) **AIR-CONDITIONING DEVICE**
KLIMATISIERUNGSVORRICHTUNG
DISPOSITIF DE CONDITIONNEMENT D'AIR

(43) Date of publication of application: 11.04.2018
(73) Proprietor: Mitsubishi Electric Corporation, Chiyoda-ku Tokyo 100-8310 (JP)
(72) Inventor: HATOMURA, Takeshi, Tokyo 100-8310 (JP); MORIMOTO, Osamu, Tokyo 100-8310 (JP); MOTOMURA, Yuji, Tokyo 100-8310 (JP); ISHIMURA, Katsuhiro, Tokyo 100-8310 (JP)
(74) Representative: Pfenning, Meinig & Partner mbB
(86) International application number: PCT/JP2015/065924
(87) International publication number: WO 2016/194145

(56) References cited:
- WO-A1-2011/101889
- WO-A1-2014/045358
- WO-A1-2014/128961
- US-A1- 2011 167 865
- US-A1- 2012 043 054
- US-A1- 2014 150 483

## Description

### Technical Field

The present invention relates to an air-conditioning apparatus which is to be applied to, for example, a building multi-air-conditioning unit.

### Background Art

Some air-conditioning apparatus, such as building multi-air-conditioning units, have a heat source unit (outdoor unit) arranged outside a building, and an indoor unit arranged in an indoor space of the building. Refrigerant that circulates through the refrigerant circuit of such an air-conditioning apparatus rejects heat to (removes heat from) air supplied to a heat exchanger of the indoor unit, to thereby heat or cool the air. The heated or cooled air is then delivered into an air-conditioned space to heat or cool the air-conditioned space.

A building usually has a plurality of indoor spaces. Accordingly, such an air-conditioning apparatus also includes a plurality of indoor units. For large-scale buildings, the refrigerant pipe that connects the outdoor unit and the indoor unit to each other may be as long as 100 m in some cases. As the length of the pipe connecting the outdoor unit and the indoor unit to each other is increased, the amount of refrigerant charged into the refrigerant circuit is increased.

When in use, the indoor unit of such a building multi-air-conditioning unit is typically arranged in an indoor space where a person is present (for example, office space, living room, or shop). When refrigerant leaks from the indoor unit arranged in the indoor space due to some reasons, there is a risk of causing problems from the viewpoint of its effect on human body and safety, because some kinds of refrigerant have flammability and toxicity. Even when the refrigerant used is not hazardous to human body, a situation is conceivable in which the leakage of refrigerant causes oxygen concentration in the indoor space to decrease, with adverse effects on human body.

To address the above-mentioned problem, there exists a method that employs a secondary loop system. This method involves circulating refrigerant through a primary loop (refrigerant cycle circuit) and circulating a nontoxic heat medium, such as water or brine, through a secondary loop (heat medium cycle circuit), and transferring the heating energy or cooling energy of the refrigerant to the heat medium (see, for example, Patent Literature 1).

With the technology described in Patent Literature 1, the heating energy or cooling energy generated in the primary loop is transferred to the secondary loop via an intermediate heat exchanger such as a plate or double-pipe heat exchanger, and the heating energy or cooling energy is supplied to the indoor unit from the secondary loop. Another feature of the technology described in Patent Literature 1 is that the pipe corresponding to the secondary loop through which the nontoxic heat medium circulates is arranged near the space where a person is present. Therefore, the adverse effects on human body due to leakage of refrigerant can be suppressed. Further, in the event of leakage of refrigerant when a flammable refrigerant is used, stagnation of refrigerant in the space where a person is present can be suppressed.

### Citation List

### Patent Literature

Patent Literature 1: International Publication No. 12/073293
WO 2014/045358 A1 discloses an air conditioner device that has a refrigerant cycle circuit, a heating medium cycle circuit, and a relay circuit that exchanges heat between the refrigerant and the heating medium. Also, the relay unit has: a heat exchange unit that exchanges heat between the refrigerant and the heating medium; and a plurality of heating medium duct-switching units that branch, sending the heating medium that has been subjected to heat exchange by the heat exchange unit to a plurality of indoor units. The heat exchange unit and the heating medium duct-switching units are housed in separate casings.

### Summary of Invention

### Technical Problem

With the technology described in Patent Literature 1, the intermediate heat exchanger connected with the refrigerant pipe of the primary loop through which refrigerant flows is arranged in a space different from the indoor space, such as the space above a ceiling. Even when the intermediate heat exchanger is arranged above a ceiling, in a case in which the ceiling has an integrated ceiling design of being separated from a space such as a living space or corridor by a mesh member or other components, there is a risk in that, in the event of leakage of refrigerant from the primary loop, the refrigerant may travel into the indoor space via the mesh member. Thus, there is difficulty in reliably preventing the leakage of refrigerant to the indoor space. Therefore, improvement in this respect has been demanded.

In preventing adverse effects on the indoor space in the event of leakage of refrigerant, it is desired to meet such demand without increasing the complexity of pipe connection.

The present invention has been made in view of the above-mentioned circumstances, and has an object to provide an air-conditioning apparatus which prevents refrigerant from leaking out to the indoor space in the event of leakage of refrigerant without increasing the complexity of pipe connection, thereby ensuring enhanced indoor safety in the event of leakage of refrigerant.

### Solution to Problem

The invention is defined in independent claim 1.

According to one embodiment of the present invention, there is provided an air-conditioning apparatus, in particular including: an outdoor unit including a compressor, a first refrigerant flow switching device, and a heat source-side heat exchanger; a heat medium relay unit including an intermediate heat exchanger, an expansion device, a second refrigerant flow switching device, and a pump; a branch unit including a heat medium flow regulating device; and at least one indoor unit including a use-side heat exchanger. The compressor, the first refrigerant flow switching device, the heat source-side heat exchanger, the expansion device, a refrigerant flow path of the intermediate heat exchanger, and the second refrigerant flow switching device are connected by a refrigerant pipe to form a refrigerant cycle circuit through which refrigerant circulates. A heat medium flow path of the intermediate heat exchanger, the branch unit, and the use-side heat exchanger are connected by a heat medium pipe to form a heat medium cycle circuit through which a heat medium different from the refrigerant circulates. The outdoor unit and the heat medium relay unit that form the refrigerant cycle circuit are arranged in a space separated from an air-conditioned space, and are formed as components separate from the branch unit and the at least one indoor unit.

### Advantageous Effects of Invention

According to one embodiment of the present invention, the outdoor unit and the heat medium relay unit that form the refrigerant cycle circuit are formed as components separate from the branch unit and the indoor unit so that the outdoor unit and the heat medium relay unit can be arranged in a space separated from the air-conditioned space. With the arrangement of the outdoor unit and the heat medium relay unit in the space separated from the air-conditioned space, refrigerant is prevented from leaking out to the air-conditioned space in the event of leakage of refrigerant, thereby being capable of ensuring enhanced safety of the air-conditioned space in the event of a leakage of refrigerant. Further, with the arrangement of the heat medium relay unit in the space separated from the air-conditioned space, a distance of the heat medium relay unit from the indoor unit is increased in comparison to a case in which the heat medium relay unit is arranged in a space that is not separated from the air-conditioned space. In this regard, the branch unit is formed as a component separate from the heat medium relay unit, and can be arranged in close proximity to the indoor unit. Therefore, it is possible to suppress increases in complexity of connection of the heat medium pipe configured to connect the branch unit to the indoor unit.

### Brief Description of Drawings

[Fig. 1] Fig. 1 is a schematic diagram for illustrating an exemplary installation of an air-conditioning apparatus according to Embodiment 1 of the present invention.
[Fig. 2] Fig. 2 is a diagram for illustrating an exemplary configuration of the refrigerant circuit of the air-conditioning apparatus according to Embodiment 1 of the present invention.
[Fig. 3] Fig. 3 is a refrigerant circuit diagram for illustrating the flow of refrigerant in a cooling only operation mode of the air-conditioning apparatus illustrated in Fig. 2.
[Fig. 4] Fig. 4 is a refrigerant circuit diagram for illustrating the flow of refrigerant in a heating only operation mode of the air-conditioning apparatus illustrated in Fig. 2.
[Fig. 5] Fig. 5 is a refrigerant circuit diagram for illustrating the flow of refrigerant in a cooling main operation mode of the air-conditioning apparatus illustrated in Fig. 2.
[Fig. 6] Fig. 6 is a refrigerant circuit diagram for illustrating the flow of refrigerant in a heating main operation mode of the air-conditioning apparatus illustrated in Fig. 2.
[Fig. 7] Fig. 7 is a schematic diagram for illustrating an exemplary installation of the air-conditioning apparatus according to Embodiment 1 of the present invention, with a heat medium relay unit 3 arranged in a space 41.
[Fig. 8] Fig. 8 is a diagram for illustrating an exemplary configuration of a refrigerant circuit of an air-conditioning apparatus according to Embodiment 2 of the present invention.

### Description of Embodiments

### Embodiment 1

Now, Embodiment 1 of the present invention is described with reference to the drawings.

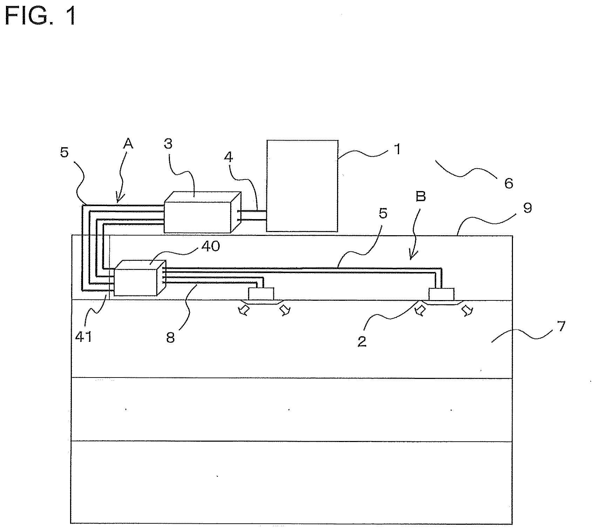

Fig. 1 is a schematic diagram for illustrating an exemplary installation of an air-conditioning apparatus according to Embodiment 1 of the present invention. The air-conditioning apparatus has a refrigerant cycle circuit A through which refrigerant (heat source-side refrigerant) is circulated, and a heat medium cycle circuit B through which a heat medium is circulated. The air-conditioning apparatus allows an indoor unit 2 to freely select a cooling mode or a heating mode as its operation mode.

The air-conditioning apparatus employs a system that indirectly uses refrigerant (indirect system). That is, cooling energy or heating energy stored in the heat source-side refrigerant is transferred to a refrigerant different from the heat source-side refrigerant (hereinafter referred to as heat medium), and cooling energy or heating energy stored in the heat medium is used to cool or heat an air-conditioned space.

As illustrated in Fig. 1, the air-conditioning apparatus according to Embodiment 1 includes a single outdoor unit 1, a plurality of indoor units 2, a heat medium relay unit 3, and a branch unit 40. The outdoor unit 1 is a heat source unit. The heat medium relay unit 3 is interposed between the outdoor unit 1 and each indoor unit 2. The branch unit 40 is interposed between each indoor unit 2 and the heat medium relay unit 3.

The heat medium relay unit 3 is configured to perform heat exchange between the heat source-side refrigerant and the heat medium. The branch unit 40 is configured to control the flow rate of the heat medium circulating through the heat medium cycle circuit B into the indoor unit 2 and storing cooling energy or heating energy. The outdoor unit 1 and the heat medium relay unit 3 are connected to each other by a refrigerant pipe 4 used to circulate the heat source-side refrigerant. The heat medium relay unit 3 and the branch unit 40 are connected to each other by a pipe (heat medium pipe) 5 used to circulate the heat medium. The branch unit 40 and the indoor unit 2 are connected to each other by the pipe (heat medium pipe) 5 used to circulate the heat medium. Cooling energy or heating energy generated in the outdoor unit 1 is delivered to the indoor unit 2 via the heat medium relay unit 3 and the branch unit 40.

The outdoor unit 1 is usually arranged in an outdoor space 6, which is a space outside a building 9 (for example, rooftop). The outdoor unit 1 supplies cooling energy or heating energy to the indoor unit 2 via the heat medium relay unit 3 and the branch unit 40.

The indoor unit 2 is arranged at a position that allows the indoor unit 2 to supply cooling air or heating air to an indoor space 7, which is a space inside the building 9 (for example, living room). The indoor unit 2 is configured to supply cooling air or heating air to the indoor space 7 that is an air-conditioned space.

The heat medium relay unit 3 is constructed with a housing separate from the outdoor unit 1, the branch unit 40 and the indoor unit 2, and is arranged in the outdoor space 6. The heat medium relay unit 3 is connected to the outdoor unit 1 and the branch unit 40 by the refrigerant pipe 4 and the heat medium pipe 5, respectively. The heat medium relay unit 3 is configured to transfer cooling energy or heating energy supplied from the outdoor unit 1 to the indoor unit 2 via the branch unit 40.

The branch unit 40 is arranged in a space 8 (for example, space above a ceiling) separated from the indoor space 7 inside the building 9. The branch unit 40 is configured to regulate the flow path and flow rate of the heat medium storing cooling energy or heating energy, which is conveyed from the heat medium relay unit 3, and distributes the resulting refrigerant to each indoor unit 2.

As illustrated in Fig. 1, in the air-conditioning apparatus according to Embodiment 1, the outdoor unit 1 and the heat medium relay unit 3 are connected to each other by two refrigerant pipes 4. The heat medium relay unit 3 and the branch unit 40 are connected to each other by four heat medium pipes 5. Each indoor unit 2 and the branch unit 40 are connected to each other by two heat medium pipes 5.

In Fig. 1, there is illustrated an exemplary case where the heat medium relay unit 3 is arranged in the outdoor space 6. However, it is not always required that the heat medium relay unit 3 be arranged in the outdoor space 6. The heat medium relay unit 3 may be arranged in, for example, a non-living space through which natural air passes, such as a space outside a building. That is, the heat medium relay unit 3 may be arranged in any space separated from the indoor space 7, which is an air-conditioned space. Thus, the heat medium relay unit 3 may be arranged in a space inside the building 9 as long as the space is separated from the indoor space 7. Examples of spaces located inside the building 9 and separated from the indoor space 7 include a machine room with a vent opening, and a warehouse having a vent opening that is located adjacent to the building 9 and communicates with the outdoor space 6. In the following description, the space located inside the building 9 and separated from the indoor space 7 is simply referred to as a space 41.

In Fig. 1, there is illustrated an exemplary state in which the branch unit 40 is arranged in a space located inside the building 9 but separated from the indoor space 7, such as a space above a ceiling (for example, space such as a space above a ceiling in the building 9, which is hereinafter simply referred to as space 8). Alternatively, the branch unit 40 may be arranged in a space such as a common use space where an elevator or other facilities are located, or a space where the heat medium relay unit 3 is arranged.

In Fig. 1, there is illustrated an exemplary case where the indoor unit 2 is of a ceiling cassette type. However, the type of the indoor unit 2 is not limited to the ceiling cassette type. That is, the air-conditioning apparatus according to Embodiment 1 may be of any type that allows heating air or cooling air to be blown out to the indoor space 7 directly or through a duct or other passageways, such as a ceiling concealed type or ceiling suspended type.

In Fig. 1, there is illustrated an exemplary case where the outdoor unit 1 is arranged in the outdoor space 6. However, the arrangement of the outdoor unit 1 is not limited thereto. For example, the outdoor unit 1 may be arranged in the space 41 that is an enclosed space, such as a machine room with a vent opening. The outdoor unit 1 may be arranged in the space 41 also when the outdoor unit 1 used is of a water-cooled type. Even when the outdoor unit 1 is arranged in such locations, there arises no particular problem.

When a mechanical ventilator is to be arranged in the space 41, it is preferred that the ventilator used have a ventilation capacity equivalent to or greater than an air volume that allows the air in the space 41 to be ventilated four times or more per hour (reference standard: International Standard ISO5149).

Alternatively, the heat medium relay unit 3 and the branch unit 40 may be arranged near the outdoor unit 1. However, when the distance from the branch unit 40 to the indoor unit 2 is too large, it is required that power for conveying the heat medium be significantly increased. Therefore, it is to be noted that energy saving effect is diminished. Further, the respective numbers of the outdoor units 1, indoor units 2, heat medium relay units 3, and branch units 40 to be connected are not particularly limited to those illustrated in Fig. 1. For example, the respective numbers of these units may be determined in accordance with the building 9 in which the air-conditioning apparatus according to Embodiment 1 is installed.

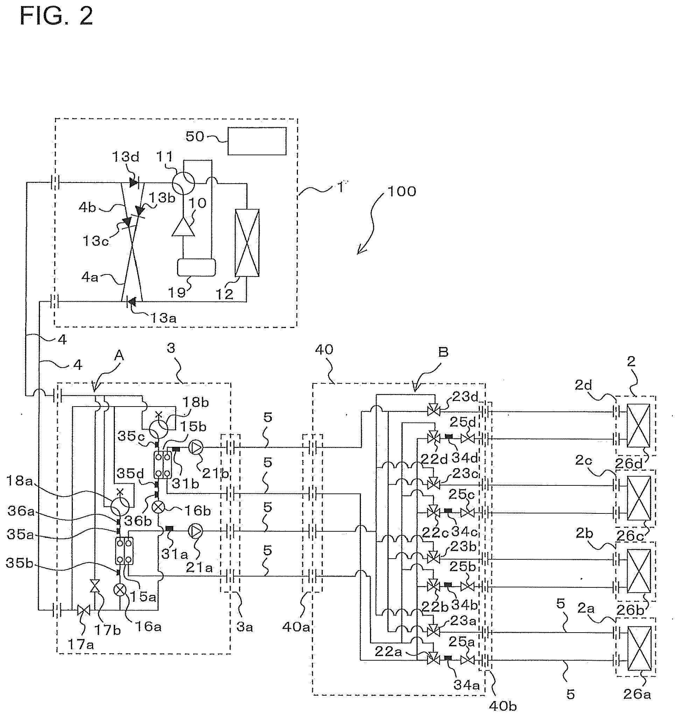

Fig. 2 is a view for illustrating an exemplary configuration of the refrigerant circuit of the air-conditioning apparatus (hereinafter referred to as air-conditioning apparatus 100) according to Embodiment 1 of the present invention. A detailed configuration of the air-conditioning apparatus 100 is described with reference to Fig. 2. As illustrated in Fig. 2, the outdoor unit 1 and the heat medium relay unit 3 are connected to each other by the refrigerant pipe 4 via an intermediate heat exchanger 15a and an intermediate heat exchanger 15b, which are arranged in the heat medium relay unit 3. The heat medium relay unit 3 and the branch unit 40 are connected to each other by the heat medium pipe 5 also via the intermediate heat exchanger 15a and the intermediate heat exchanger 15b. The branch unit 40 and the indoor unit 2 are connected to each other by the heat medium pipe 5. The refrigerant pipe 4 is described later in detail.

A characteristic feature of the air-conditioning apparatus 100 according to Embodiment 1 resides in the following configuration. That is, for example, a portion of the heat medium relay unit according to Patent Literature 1 through which the heat medium passes is formed as an independent unit (branch unit) separate from the heat medium relay unit, so that a portion through which both the refrigerant and the heat medium pass (heat medium relay unit), and a portion through which only the heat medium passes (branch unit) can be arranged at locations apart from each other.

Specifically, the heat medium relay unit 3 includes a connection port 3a for connection with the branch unit 40, and the branch unit 40 is connected to the connection port 3a via the heat medium pipe 5. The branch unit 40 includes a connection port 40a for connection with the heat medium relay unit 3. The connection port 40a and the connection port 3a of the heat medium relay unit 3 are connected to each other by the heat medium pipe 5. The branch unit 40 further includes a connection port 40b for connection with each indoor unit 2. The indoor unit 2 is connected to the connection port 40b via the heat medium pipe 5.

As described above, the heat medium relay unit 3 through which both the refrigerant and the heat medium pass, and the branch unit 40 through which only the heat medium passes can be arranged in different spaces, and the heat medium relay unit 3 is arranged in a space separated from the indoor space 7, which is an air-conditioned space. With this arrangement, all of the devices and refrigerant pipes forming the refrigerant cycle circuit A are arranged in a space separated from the indoor space 7. Therefore, entry of refrigerant into the indoor space 7 can be prevented even when leakage of refrigerant from the refrigerant cycle circuit A occurs.

The heat medium relay unit according to Patent Literature 1 has a configuration in which the heat medium relay unit and a plurality of indoor units are directly connected to each other by heat medium pipes. Thus, in accordance with the number of indoor units, two heat medium pipes 5 for forward and return paths are required to connect each single indoor unit and the heat medium relay unit to each other (for example, eight heat medium pipes 5 are required when four indoor units are to be connected). This configuration also requires a plurality of heat medium pipes 5 with an extended length to connect a plurality of indoor units located inside the building and the heat medium relay unit located outside the building or in the machine room to each other.

In contrast, the air-conditioning apparatus 100 according to Embodiment 1 has a configuration in which the heat medium relay unit 3 located outside the building or in the machine room and the branch unit 40 located inside the building are connected to each other by a definite number of (four) heat medium pipes 5. As a result, the number of heat medium pipes 5 extending from a space outside the building or from the machine room into the building does not vary with the number of indoor units 2. Therefore, the number of heat medium pipes 5 to be connected from the heat medium relay unit 3 to a space inside the building can be reduced in comparison to Patent Literature 1. Further, the two heat medium pipes 5 for forward and return paths, which are connected to each single indoor unit 2, only need to have a length equal to the distance to the branch unit 40. This allows reduced length of the heat medium pipe 5 in comparison to the configuration according to Patent Literature 1 that requires the heat medium pipe 5 to be extended all the way to the heat medium relay unit 3. This can help improve the ease of installation, such as by facilitating positioning between each indoor unit 2 and the branch unit 40.

The outdoor unit 1, the indoor unit 2, and the branch unit 40 are described below in the stated order.

### [Outdoor Unit 1]

The outdoor unit 1 includes a compressor 10, a first refrigerant flow switching device 11, a heat source-side heat exchanger 12, and an accumulator 19, which are connected by the refrigerant pipe 4. The compressor 10 is configured to compress refrigerant. The first refrigerant flow switching device 11 is constructed by, for example, a four-way valve. The heat source-side heat exchanger 12 functions as an evaporator or a condenser. The accumulator 19 is configured to store excess refrigerant. It is not always required that the first refrigerant flow switching device 11 be constructed by a four-way valve. For example, the first refrigerant flow switching device 11 may be constructed by a combination of valves such as a three-way valve, a two-way valve, and a solenoid valve.

Further, the outdoor unit 1 includes a first connection pipe 4a, a second connection pipe 4b, a backflow prevention device 13a, a backflow prevention device 13b, a backflow prevention device 13c, and a backflow prevention device 13d. With the configuration including the first connection pipe 4a, the second connection pipe 4b, the backflow prevention device 13a, the backflow prevention device 13b, the backflow prevention device 13c, and the backflow prevention device 13d, the flow of the heat source-side refrigerant from the outdoor unit 1 into the heat medium relay unit 3 can be set to a fixed direction irrespective of the mode of operation requested by the indoor unit 2. That is, the refrigerant flowing out of the outdoor unit 1 flows out of the outdoor unit 1 via the refrigerant pipe 4 (first refrigerant pipe) that is connected to the backflow prevention devices 13a and 13b, and the refrigerant flowing into the outdoor unit 1 from the heat medium relay unit 3 flows into the outdoor unit 1 via the refrigerant pipe 4 (second refrigerant pipe) that is connected to the backflow prevention devices 13c and 13d. It is preferred that the backflow prevention devices 13a to 13d each be constructed by, for example, a check valve.

The compressor 10 is configured to suck the heat source-side refrigerant, and compress the heat source-side refrigerant into a high-temperature and high-pressure state. It is preferred that the compressor 10 be constructed by, for example, an inverter compressor whose capacity can be controlled.

The first refrigerant flow switching device 11 is configured to switch between the flow of heat source-side refrigerant in a heating operation mode (heating only operation mode and heating main operation mode), and the flow of heat source-side refrigerant in a cooling operation mode (cooling only operation mode and cooling main operation mode).

The heat source-side heat exchanger 12 functions as an evaporator in the heating operation, and functions as a radiator (gas cooler) in a cooling operation. The heat source-side heat exchanger 12 is configured to perform heat exchange between air supplied from an air-sending device (not shown), such as a fan, and the heat source-side refrigerant.

The accumulator 19 is arranged on the suction side of the compressor 10, and is configured to store excess refrigerant resulting from the difference between the heating operation mode and the cooling operation mode, or excess refrigerant generated due to transient changes in operation (for example, change in number of indoor units 2 that are running) or due to changes in load condition.

### [Indoor Unit 2]

The indoor unit 2 includes a use-side heat exchanger 26. The use-side heat exchanger 26 is connected by the heat medium pipe 5 to a heat medium flow control device 25 of the heat medium relay unit 3 and to a second heat medium flow switching device 23. The use-side heat exchanger 26 is configured to perform heat exchange between air supplied from an air-sending device such as a fan (not shown) and the heat medium, to thereby generate the heating air or cooling air that is to be supplied to the indoor space 7.

In Fig. 2, there is illustrated an exemplary case in which the heat medium relay unit 3 is connected to four indoor units 2. The four indoor units 2 are illustrated as an indoor unit 2a, an indoor unit 2b, an indoor unit 2c, and an indoor unit 2d in the stated order from the lower side of the drawing sheet. In association with the indoor units 2a to 2d, the corresponding use-side heat exchangers 26 are also illustrated as a use-side heat exchanger 26a, a use-side heat exchanger 26b, a use-side heat exchanger 26c, and a use-side heat exchanger 26d in the stated order from the lower side of the drawing sheet. The number of indoor units 2 to be connected is not limited to four as illustrated in Fig. 2.

### [Heat Medium Relay Unit 3]

The heat medium relay unit 3 includes two intermediate heat exchangers 15 (15a and 15b) configured to perform heat exchange between the refrigerant and the heat medium, two expansion devices 16 (16a and 16b) configured to reduce the pressure of refrigerant, two opening and closing devices 17 (17a and 17b) configured to open and close the flow path of the refrigerant pipe 4, two second refrigerant flow switching devices 18 (18a and 18b) configured to switch the flows of refrigerant, and two pumps 21 (21a and 21b) configured to cause the heat medium to circulate.

The two intermediate heat exchangers 15a and 15b, which each function as a condenser (radiator) or an evaporator, are configured to perform heat exchange between the heat source-side refrigerant and the heat medium, and transfer, to the heat medium, cooling energy or heating energy generated in the outdoor unit 1 and stored in the heat source-side refrigerant. The intermediate heat exchanger 15a is arranged between the expansion device 16a and the second refrigerant flow switching device 18a in the refrigerant cycle circuit A. The intermediate heat exchanger 15a is used to cool the heat medium in a cooling and heating mixed operation mode. The intermediate heat exchanger 15b is arranged between the expansion device 16b and the second refrigerant flow switching device 18b in the refrigerant cycle circuit A. The intermediate heat exchanger 15b is used to heat the heat medium in the cooling and heating mixed operation mode.

The two intermediate heat exchangers 15a and 15b have the following configuration to ensure that even when refrigerant leaks from a refrigerant-side heat transfer tube, the refrigerant is not mixed with the heat medium. That is, for example, the two intermediate heat exchangers 15a and 15b are each constructed by a double-wall plate heat exchanger, or a heat exchanger in which a heat transfer tube through which the refrigerant flows and a heat transfer tube through which the heat medium flows are arranged separately and bonded together by brazing or other methods.

The two expansion devices 16a and 16b, which each function as a pressure reducing valve or an expansion valve, are configured to cause the heat source-side refrigerant to be reduced in pressure and expand. The expansion device 16a is arranged upstream of the intermediate heat exchanger 15a with respect to the flow of the heat source-side refrigerant in the cooling only operation mode. The expansion device 16b is arranged upstream of the intermediate heat exchanger 15b with respect to the flow of the heat source-side refrigerant in the cooling only operation mode. It is preferred that the two expansion devices 16 each be constructed by a device whose opening degree can be variably controlled, for example, an electronic expansion valve.

The two opening and closing devices 17a and 17b, which are each constructed by a two-way valve or other devices, are configured to open and close the refrigerant pipe 4. That is, the opening and closing action of the two opening and closing devices 17a and 17b is controlled in accordance with the mode of operation described later so as to control the flow of refrigerant supplied from the refrigerant pipe 4 (first refrigerant pipe).

The two second refrigerant flow switching devices 18a and 18b are each constructed by, for example, a four-way valve, and are configured to switch the flows of the heat source-side refrigerant in accordance with the mode of operation. The second refrigerant flow switching device 18a is arranged downstream of the intermediate heat exchanger 15a with respect to the flow of the heat source-side refrigerant in the cooling only operation mode. The second refrigerant flow switching device 18b is arranged downstream of the intermediate heat exchanger 15b with respect to the flow of the heat source-side refrigerant in the cooling only operation mode. It is not always required that the second refrigerant flow switching device 18 be constructed by a four-way valve. The second refrigerant flow switching device 18 may be constructed by, for example, a combination of valves such as a three-way valve, a two-way valve, and a solenoid valve.

The two pumps 21a and 21b are configured to cause the heat medium in the heat medium pipe 5 to circulate. The pump 21a is arranged in the portion of the heat medium pipe 5 between the intermediate heat exchanger 15a and the second heat medium flow switching device 23. The pump 21b is arranged in the portion of the heat medium pipe 5 between the intermediate heat exchanger 15b and the second heat medium flow switching device 23. It is preferred that each of the pumps 21 be constructed by, for example, a pump whose capacity can be controlled. The pump 21a may be arranged in the portion of the heat medium pipe 5 between the intermediate heat exchanger 15a and the first heat medium flow switching device 22. Further, the pump 21b may be arranged in the portion of the heat medium pipe 5 between the intermediate heat exchanger 15b and the first heat medium flow switching device 22.

The heat medium relay unit 3 includes various detection units (two first temperature sensors 31 (31a and 31b), which are inflow temperature sensors, four third temperature sensors 35 (35a to 35d), and two pressure sensors 36 (36a and 36b)). Information detected by each of these detection units (for example, temperature information, pressure information, or information about the concentration of heat source-side refrigerant) is sent to a controller 50 configured to control the operation of the air-conditioning apparatus 100 in a centralized manner. Each piece of such detected information is used to control the driving frequency of the compressor 10, the rotation speed of an air-sending device (not shown) arranged near each of the heat source-side heat exchanger 12 and the use-side heat exchanger 26, switching of the first refrigerant flow switching device 11, the driving frequency of the pump 21, switching of the second refrigerant flow switching device 18, switching of the first heat medium flow switching device 22, switching of the second heat medium flow switching device 23, the opening degree of the heat medium flow control device 25, or other operational states.

The two first temperature sensors 31a and 31b are configured to detect the temperature of the heat medium having flowed out of the intermediate heat exchanger 15, that is, the temperature of the heat medium at the outlet of the intermediate heat exchanger 15. It is preferred that the two first temperature sensors 31a and 31b each be constructed by, for example, a thermistor. The first temperature sensor 31a is arranged on the heat medium pipe 5 on the inlet side of the pump 21a. The first temperature sensor 31b is arranged on the heat medium pipe 5 on the inlet side of the pump 21b. Alternatively, the first temperature sensor 31 may be arranged on the heat medium pipe 5 located in the branch unit 40, which is described later, and through which the heat medium flows into the use-side heat exchanger 26.

The four third temperature sensors 35a to 35d are arranged on the inlet side or outlet side of the intermediate heat exchanger 15, and are configured to detect the temperature of the heat source-side refrigerant flowing into the intermediate heat exchanger 15 or the temperature of the heat source-side refrigerant having flowed out of the intermediate heat exchanger 15. It is preferred that the four third temperature sensors 35a to 35d each be constructed by, for example, a thermistor. The third temperature sensor 35a is arranged between the intermediate heat exchanger 15a and the second refrigerant flow switching device 18a. The third temperature sensor 35b is arranged between the intermediate heat exchanger 15a and the expansion device 16a. The third temperature sensor 35c is arranged between the intermediate heat exchanger 15b and the second refrigerant flow switching device 18b. The third temperature sensor 35d is arranged between the intermediate heat exchanger 15b and the expansion device 16b.

The two pressure sensors 36a and 36b are each configured to detect the pressure of refrigerant. The pressure sensor 36a is arranged at a position similar to the position at which the third temperature sensor 35a is arranged, and is configured to detect the pressure of the heat source-side refrigerant flowing between the intermediate heat exchanger 15a and the second refrigerant flow switching device 18a. The pressure sensor 36b is arranged at a position between the intermediate heat exchanger 15b and the expansion device 16b similarly to the position at which the third temperature sensor 35d is arranged, and is configured to detect the pressure of the heat source-side refrigerant flowing between the intermediate heat exchanger 15b and the expansion device 16b.

### [Branch Unit 40]

The branch unit 40 includes a first heat medium flow regulating device and a second heat medium flow regulating device. The first heat medium flow regulating device includes four first heat medium flow switching devices 22 (22a to 22d) connected to one of the heat medium pipes 5, and four heat medium flow control devices 25 (25a to 25d) connected to the heat medium pipe 5 to which the first heat medium flow switching devices 22 are connected. The second heat medium flow regulating device includes four second heat medium flow switching devices 23 (23a to 23d) connected to the other of the heat medium pipes 5.

Each of the first heat medium flow regulating device and the second heat medium flow regulating device may be constructed with one of the following configurations (1) and (2), or constructed by the following item (3).
(1) At least one valve with three or more flow paths is provided.
(2) At least two valves with two or more flow paths are provided.
(3) One of the first heat medium flow regulating device and the second heat medium flow regulating device is constructed by at least one valve with three or more flow paths or at least one valve with two or more flow paths, and the other is constructed by at least one valve with three or more flow paths.

The first heat medium flow switching devices 22, which include the four first heat medium flow switching devices 22a to 22d, are each constructed by a three-way valve or other devices, and are configured to switch the flows of the heat medium. The number of first heat medium flow switching devices 22 to be provided (four in this case) corresponds to the number of indoor units 2 to be provided. Of the three ports of the first heat medium flow switching device 22, one is connected to the intermediate heat exchanger 15a, one is connected to the intermediate heat exchanger 15b, and one is connected to the heat medium flow control device 25. The first heat medium flow switching device 22 is arranged on the outlet side of the heat medium flow path of the use-side heat exchanger 26. In association with the corresponding indoor units 2, the first heat medium flow switching device 22a, the first heat medium flow switching device 22b, the first heat medium flow switching device 22c, and the first heat medium flow switching device 22d are illustrated in the stated order from the lower side of the drawing sheet.

It is not always required that the first heat medium flow switching devices 22 each be constructed by a three-way valve. For example, a combination of valves such as a two-way valve and a solenoid valve may be used, or a valve with a number of flow paths greater than that of a three-way valve, such as a four-way valve, may be used with its redundant flow path closed.

The four second heat medium flow switching devices 23a to 23d are each constructed by a three-way valve or other devices, and are configured to switch the flows of the heat medium. The number of second heat medium flow switching devices 23 to be provided (four in this case) corresponds to the number of indoor units 2 to be provided. Of the three ports of the second heat medium flow switching device 23, one is connected to the intermediate heat exchanger 15a, one is connected to the intermediate heat exchanger 15b, and one is connected to the use-side heat exchanger 26. The second heat medium flow switching device 23 is arranged on the inlet side of the heat medium flow path of the use-side heat exchanger 26. In association with the corresponding indoor units 2, the second heat medium flow switching device 23a, the second heat medium flow switching device 23b, the second heat medium flow switching device 23c, and the second heat medium flow switching device 23d are illustrated in the stated order from the lower side of the drawing sheet.

It is not always required that the second heat medium flow switching devices 23 each be constructed by a three-way valve. For example, a combination of valves such as a two-way valve and a solenoid valve may be used, or a valve with a number of flow paths greater than that of a three-way valve, such as a four-way valve, may be used with its redundant flow path closed.

The four heat medium flow control devices 25a to 25d are each constructed by a two-way valve or other devices whose opening area can be controlled, and are configured to control the flow rate of the heat medium through the heat medium pipe 5. The number of heat medium flow control devices 25 to be provided (four in this case) corresponds to the number of indoor units 2 to be provided. One port of the heat medium flow control device 25 is connected to the use-side heat exchanger 26, and the other port is connected to the first heat medium flow switching device 22. The heat medium flow control device 25 is arranged on the outlet side of the heat medium flow path of the use-side heat exchanger 26. In association with the corresponding indoor units 2, the heat medium flow control device 25a, the heat medium flow control device 25b, the heat medium flow control device 25c, and the heat medium flow control device 25d are illustrated in the stated order from the lower side of the drawing sheet. Alternatively, the heat medium flow control device 25 may be arranged on the inlet side of the heat medium flow path of the use-side heat exchanger 26.

In Fig. 2, there is illustrated an exemplary case in which the first heat medium flow regulating device including the first heat medium flow switching devices 22 (22a to 22d) and the heat medium flow control devices 25 (25a to 25d), and the second heat medium flow regulating device including the second heat medium flow switching devices 23 (23a to 23d) are arranged as separate components. However, the arrangement of the first heat medium flow regulating device and the second heat medium flow regulating device is not limited thereto. As long as the first heat medium flow regulating device and the second heat medium flow regulating device have similar functions, these heat medium flow regulating devices may be integrated together (into a block). Specifically, for example, a block structure described in International Patent WO2014/128961, which includes the respective functions of the first heat medium flow switching devices 22 (22a to 22d), the heat medium flow control devices 25 (25a to 25d), and the second heat medium flow switching devices 23 (23a to 23d) may be employed.

The branch unit 40 further includes four second temperature sensors 34 (34a to 34d), which are outflow temperature sensors. Information detected by each of these detection units (for example, temperature information) is sent to the controller 50 configured to control the operation of the air-conditioning apparatus 100 in a centralized manner. The information transmitted to the controller 50 is used to control the driving frequency of the compressor 10, the rotation speed of the air-sending device (not shown) arranged near each of the heat source-side heat exchanger 12 and the use-side heat exchanger 26, switching of the first refrigerant flow switching device 11, the driving frequency of the pump 21, switching of the second refrigerant flow switching device 18, switching of the first heat medium flow switching device 22, switching of the second heat medium flow switching device 23, the opening degree of the heat medium flow control device 25, or other operational states.

The four second temperature sensors 34a to 34d are arranged between the first heat medium flow switching device 22 and the heat medium flow control device 25 to detect the temperature of the heat medium having flowed out of the use-side heat exchanger 26. It is preferred that the four second temperature sensors 34a to 34d each be constructed by a thermistor or other devices. The number of second temperature sensors 34 to be provided (four in this case) corresponds to the number of indoor units 2 to be provided. In association with the corresponding indoor units 2, the second temperature sensor 34a, the second temperature sensor 34b, the second temperature sensor 34c, and the second temperature sensor 34d are illustrated in the stated order from the lower side of the drawing sheet. Alternatively, the four second temperature sensors 34a to 34d may be arranged between the heat medium flow control device 25 and the use-side heat exchanger 26.

In Fig. 2, the two first temperature sensors 31a and 31b arranged in the heat medium relay unit 3 are configured to detect the temperature of the heat medium having flowed out of the intermediate heat exchanger 15, that is, the temperature of the heat medium at the outlet of the intermediate heat exchanger 15. In other words, the first temperature sensors 31a and 31b are configured to detect the temperature of the heat medium flowing into the use-side heat exchanger 26. The first temperature sensors 31a and 31b may be arranged on the heat medium pipe 5 located in the branch unit 40 and through which the heat medium flows into the use-side heat exchanger 26. When the first temperature sensor 31 is to be arranged on the heat medium pipe 5 through which the heat medium flows into the use-side heat exchanger 26, the first temperature sensor 31 is arranged on the heat medium pipe 5 located between each of the second heat medium flow switching devices 23a to 23d and each of the use-side heat exchangers 26a to 26d and on the inlet side of the pump 21b.

The controller 50 is constructed by a microcomputer or other devices. The controller 50 is configured to control, based on information detected by various detection units and an instruction from a remote controller, the driving frequency of the compressor 10, the rotation speed (including ON/OFF) of the air-sending device, switching of the first refrigerant flow switching device 11, driving of the pump 21, the opening degree of the expansion device 16, opening and closing of the opening and closing device 17, switching of the second refrigerant flow switching device 18, switching of the first heat medium flow switching device 22, switching of the second heat medium flow switching device 23, the opening degree of the heat medium flow control device 25, or other operational states. That is, the controller 50 is configured to control various devices in a centralized manner to execute a defrost operation described later, and various operation modes.

In Fig. 2, there is illustrated an exemplary case in which the controller 50 is provided to the outdoor unit 1. However, the arrangement of the controller 50 is not limited thereto. That is, the controller 50 may be arranged for each indoor unit 2, may be arranged in the heat medium relay unit 3, or may be arranged in the branch unit 40. Alternatively, a plurality of controllers 50 may be arranged in the outdoor unit 1, the indoor unit 2, the heat medium relay unit 3, and the branch unit 40 in a manner that allows the controllers 50 to be controlled in a coordinated fashion through communication.

The heat medium pipes 5 circulating the heat medium include the heat medium pipe 5 connected to the intermediate heat exchanger 15a, and the heat medium pipe 5 connected to the intermediate heat exchanger 15b. Four heat medium pipes 5 are arranged between the heat medium relay unit 3 and the branch unit 40 to connect the two units. The heat medium pipe 5 is branched in accordance with the number of indoor units 2 connected to the branch unit 40 (split into four branches in this case). The heat medium pipe 5 between the branch unit 40 and the indoor unit 2 is connected with the first heat medium flow switching device 22 and the second heat medium flow switching device 23. The first heat medium flow switching device 22 and the second heat medium flow switching device 23 are controlled to determine whether to direct the heat medium from the intermediate heat exchanger 15a into the use-side heat exchanger 26 or direct the heat medium from the intermediate heat exchanger 15b into the use-side heat exchanger 26.

In Fig. 2, there is illustrated an exemplary case in which the heat medium relay unit 3 and the branch unit 40 are connected by four heat medium pipes 5. However, the following configuration may be employed when the indoor unit 2 is not required to perform simultaneous cooling and heating operation. That is, the heat medium pipe 5 on the outlet side of each intermediate heat exchanger 15 and the heat medium pipe 5 on the inlet side of each intermediate heat exchanger 15 are combined together and, further, the heat medium pipe 5 on the outlet side of each branch unit and the heat medium pipe 5 on the inlet side of each branch unit are combined together so that the heat medium relay unit 3 and the branch unit 40 are connected by two heat medium pipes 5.

In the air-conditioning apparatus 100, the refrigerant cycle circuit A is formed by connecting the compressor 10, the first refrigerant flow switching device 11, the heat source-side heat exchanger 12, the opening and closing device 17, the second refrigerant flow switching device 18, the refrigerant flow path of the intermediate heat exchanger 15, the expansion device 16, and the accumulator 19 by the refrigerant pipe 4. Further, the heat medium cycle circuit B is formed by connecting the heat medium flow path of the intermediate heat exchanger 15, the pump 21, the first heat medium flow switching device 22, the heat medium flow control device 25, the use-side heat exchanger 26, and the second heat medium flow switching device 23 are connected by the heat medium pipe 5. That is, a plurality of use-side heat exchangers 26 are connected in parallel to each of the intermediate heat exchangers 15, and thus the heat medium cycle circuit B is made up of a plurality of lines.

Therefore, in the air-conditioning apparatus 100, the outdoor unit 1 and the heat medium relay unit 3 are connected to each other via the intermediate heat exchanger 15 arranged in the heat medium relay unit 3, and the heat medium relay unit 3 and the indoor unit 2 are connected to each other via the intermediate heat exchanger 15 and the branch unit 40. That is, in the air-conditioning apparatus 100, the heat source-side refrigerant circulating through the refrigerant cycle circuit A, and the heat medium circulating through the heat medium cycle circuit B exchange heat in the intermediate heat exchanger 15a and the intermediate heat exchanger 15b.

### [Description of Operation Modes]

Next, various operation modes executed by the air-conditioning apparatus 100 are described. The air-conditioning apparatus 100 is capable of performing, based on an instruction from each indoor unit 2, the cooling operation or the heating operation in the corresponding indoor unit 2. That is, the air-conditioning apparatus 100 allows all of the indoor units 2 to perform the same operation, and also allows each individual indoor unit 2 to perform a different operation.

Operation modes executed by the air-conditioning apparatus 100 include the cooling only operation mode in which all of the indoor units 2 that are running execute cooling, the heating only operation mode in which all of the indoor units 2 that are running execute heating, the cooling main operation mode as a type of cooling and heating mixed operation mode in which the cooling load is greater than the heating load, and the heating main operation mode as a type of cooling and heating mixed operation mode in which the heating load is greater than the cooling load.

Now, each of the operation modes is described together with the corresponding flows of the heat source-side refrigerant and heat medium.

### [Cooling Only Operation Mode]

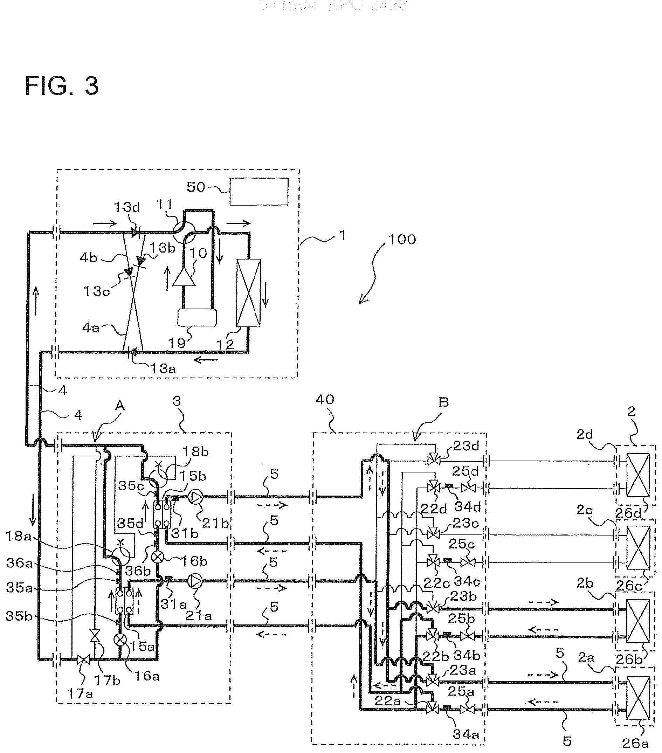

Fig. 3 is a refrigerant circuit diagram for illustrating the flow of refrigerant in the cooling only operation mode of the air-conditioning apparatus 100. With reference to Fig. 3, the cooling only operation mode is described for an exemplary case in which a cooling load is generated only in the use-side heat exchanger 26a and the use-side heat exchanger 26b. In Fig. 3, pipes indicated by the thick lines represent pipes through which the refrigerant (heat source-side refrigerant and heat medium) flows. In Fig. 3, the flow direction of the heat source-side refrigerant is indicated by the solid arrows, and the flow direction of the heat medium is indicated by the broken arrows.

In the case of the cooling main operation mode illustrated in Fig. 3, in the outdoor unit 1, the first refrigerant flow switching device 11 is switched such that the heat source-side refrigerant having been discharged from the compressor 10 is routed into the heat source-side heat exchanger 12. In the heat medium relay unit 3, the pump 21a and the pump 21b are driven, the heat medium flow control device 25a and the heat medium flow control device 25b are opened and the heat medium flow control device 25c and the heat medium flow control device 25d are fully closed. With this configuration, the heat medium circulates between the intermediate heat exchanger 15a and the use-side heat exchanger 26a and between the intermediate heat exchanger 15b and the use-side heat exchanger 26b.

First, the flow of the heat source-side refrigerant in the refrigerant cycle circuit A is described.

A low-temperature and low-pressure refrigerant is compressed by the compressor 10, and is discharged as a high-temperature and high-pressure gas refrigerant. The high-temperature and high-pressure gas refrigerant having been discharged from the compressor 10 flows into the heat source-side heat exchanger 12 via the first refrigerant flow switching device 11. In the heat source-side heat exchanger 12, the refrigerant changes to a high-pressure liquid refrigerant while rejecting heat to the outdoor air. The high-pressure refrigerant having flowed out of the heat source-side heat exchanger 12 passes through the backflow prevention device 13a and flows out of the outdoor unit 1, and then passes through the refrigerant pipe 4 into the heat medium relay unit 3. The high-pressure refrigerant having flowed into the heat medium relay unit 3 is routed through the opening and closing device 17a, and is then divided into respective branch streams that undergo expansion in the expansion device 16a and the expansion device 16b and turn into a low-temperature and low-pressure two-phase refrigerant. The opening and closing device 17b is in its closed position at this time.

The respective streams of two-phase refrigerant flow into the intermediate heat exchanger 15a and the intermediate heat exchanger 15b acting as evaporators, and remove heat from the heat medium circulating through the heat medium cycle circuit B and thus turn into a low-temperature and low-pressure gas refrigerant while cooling the heat medium. The respective streams of gas refrigerant having flowed out of the intermediate heat exchanger 15a and the intermediate heat exchanger 15b pass through the second refrigerant flow switching device 18a and the second refrigerant flow switching device 18b, and then flows out of the heat medium relay unit 3. The resulting gas refrigerant passes through the refrigerant pipe 4 and flows into the outdoor unit 1 again. The refrigerant having flowed into the outdoor unit 1 passes through the backflow prevention device 13d, and is sucked into the compressor 10 again via the first refrigerant flow switching device 11 and the accumulator 19.

At this time, the second refrigerant flow switching device 18a and the second refrigerant flow switching device 18b each communicate to a low pressure-side pipe. Further, the opening degree of the expansion device 16a is controlled such that the superheat (degree of superheat) obtained as the difference between the temperature detected by the third temperature sensor 35a and the temperature detected by the third temperature sensor 35b is constant. Similarly, the opening degree of the expansion device 16b is controlled such that the superheat obtained as the difference between the temperature detected by the third temperature sensor 35c and the temperature detected by the third temperature sensor 35d is constant.

Next, the flow of the heat medium in the heat medium cycle circuit B is described.

In the cooling only operation mode, the cooling energy of the heat source-side refrigerant is transferred to the heat medium in both the intermediate heat exchanger 15a and the intermediate heat exchanger 15b, and the cooled heat medium is caused to flow in the heat medium pipe 5 by the pump 21a and the pump 21b. The respective streams of the heat medium having been pressurized by the pump 21a and the pump 21b and having flowed out flow into the use-side heat exchanger 26a and the use-side heat exchanger 26b via the heat medium pipe 5 and via the second heat medium flow switching device 23a and the second heat medium flow switching device 23b that are located in the branch unit 40. Then, the respective streams of the heat medium remove heat from the indoor air in the use-side heat exchanger 26a and the use-side heat exchanger 26b to cool the indoor space 7.

Then, the respective streams of the heat medium flow out of the use-side heat exchanger 26a and the use-side heat exchanger 26b and flow into the heat medium flow control device 25a and the heat medium flow control device 25b. At this time, in order to provide the air conditioning load required for the indoor space, the heat medium flow control device 25a and the heat medium flow control device 25b have their opening degree controlled such that the difference in temperature between the value detected by the second temperature sensor 34 and the value detected by the first temperature sensor 31 has a predetermined value (for example, 5 degrees Celsius to 10 degrees Celsius). Specifically, when the temperature difference is smaller than a predetermined value, the heat medium flow control device 25a and the heat medium flow control device 25b have their opening degree controlled toward a close position. When the temperature difference is greater than a predetermined value, their opening degree is controlled toward an open position. As described above, the heat medium is caused to flow into each of the use-side heat exchanger 26a and the use-side heat exchanger 26b after being controlled to a flow rate that is required in accordance with the air conditioning load required for the indoor space.

The respective streams of the heat medium having flowed out of the heat medium flow control device 25a and the heat medium flow control device 25b flow out of the branch unit 40 after passing through the first heat medium flow switching device 22a and the first heat medium flow switching device 22b, and then are routed through the heat medium pipe 5 into the intermediate heat exchanger 15a and the intermediate heat exchanger 15b and sucked into the pump 21a and the pump 21b again.

Within the heat medium pipe 5 of the use-side heat exchanger 26, the heat medium flows in such a direction that the heat medium travels from the second heat medium flow switching device 23 to the first heat medium flow switching device 22 via the heat medium flow control device 25. The air conditioning load required for the indoor space 7 can be provided by performing a control such that the difference between the temperature detected by the first temperature sensor 31a or the temperature detected by the first temperature sensor 31b, and the temperature detected by the second temperature sensor 34 is maintained at a predetermined value (for example, about 5 degrees Celsius to 10 degrees Celsius). As the outlet temperature of the intermediate heat exchanger 15, one of the temperature detected by the first temperature sensor 31a and the temperature detected by the first temperature sensor 31b may be used, or the mean of the two temperatures may be used. At this time, the first heat medium flow switching device 22 and the second heat medium flow switching device 23 are controlled to an intermediate opening degree to secure flow paths leading to both the intermediate heat exchanger 15a and the intermediate heat exchanger 15b.

In executing the cooling only operation mode, there is no need to pass the heat medium to the use-side heat exchanger 26 in which no thermal load exists (including thermo-OFF). Accordingly, the flow path to the corresponding use-side heat exchanger 26 is closed by the heat medium flow control device 25 so that the heat medium is prevented from flowing to the use-side heat exchanger 26 in which no thermal load exists. In Fig. 3, a thermal load is generated in the use-side heat exchanger 26a and the use-side heat exchanger 26b, and hence the heat medium is passed to these heat exchangers. In contrast, no thermal load is generated in the use-side heat exchanger 26c and the use-side heat exchanger 26d, and hence the corresponding heat medium flow control devices 25c and 25d are fully closed. When a thermal load is generated in the use-side heat exchanger 26c or the use-side heat exchanger 26d, the heat medium flow control device 25c or the heat medium flow control device 25d may be opened to allow the heat medium to circulate.

### [Heating Only Operation Mode]

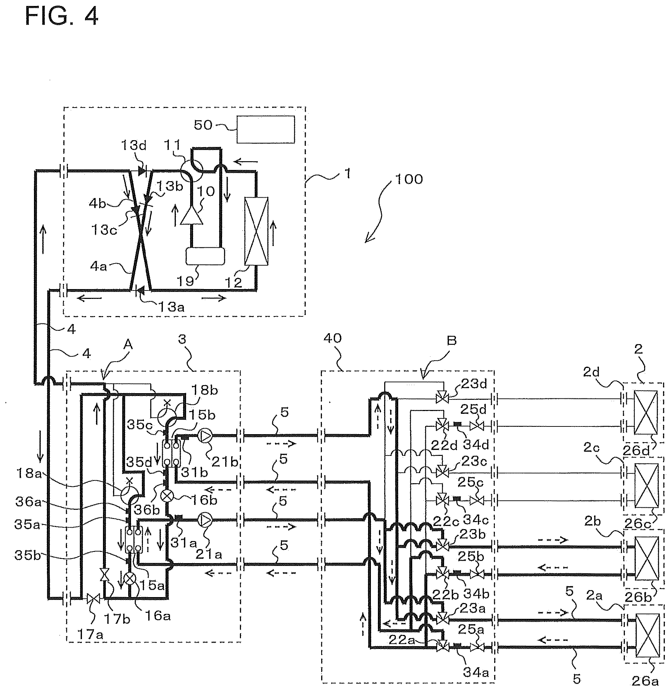

Fig. 4 is a refrigerant circuit diagram for illustrating the flow of refrigerant in the heating only operation mode of the air-conditioning apparatus 100. With reference to Fig. 4, the heating only operation mode is described with an exemplary case in which a heating load is generated only in the use-side heat exchanger 26a and the use-side heat exchanger 26b. In Fig. 4, pipes indicated by the thick lines represent pipes through which the refrigerant (heat source-side refrigerant and heat medium) flows. In Fig. 4, the flow direction of the heat source-side refrigerant is indicated by the solid arrows, and the flow direction of the heat medium is indicated by the broken arrows.

In the case of the heating only operation mode illustrated in Fig. 4, in the outdoor unit 1, the first refrigerant flow switching device 11 is switched such that the heat source-side refrigerant having been discharged from the compressor 10 is caused to flow into the heat medium relay unit 3 without passing through the heat source-side heat exchanger 12. In the heat medium relay unit 3, the pump 21a and the pump 21b are driven. In the branch unit 40, the heat medium flow control device 25a and the heat medium flow control device 25b are opened, and the heat medium flow control device 25c and the heat medium flow control device 25d are fully closed. With this action, the heat medium circulates between the intermediate heat exchanger 15a and the use-side heat exchanger 26a and between the intermediate heat exchanger 15b and the use-side heat exchanger 26b.

First, the flow of the heat source-side refrigerant in the refrigerant cycle circuit A is described.

A low-temperature and low-pressure refrigerant is compressed by the compressor 10, and is discharged as a high-temperature and high-pressure gas refrigerant. The high-temperature and high-pressure gas refrigerant having been discharged from the compressor 10 passes through the first refrigerant flow switching device 11 and the backflow prevention device 13b, and flows out of the outdoor unit 1. The high-temperature and high-pressure gas refrigerant having flowed out of the outdoor unit 1 passes through the refrigerant pipe 4 into the heat medium relay unit 3. The high-temperature and high-pressure gas refrigerant having flowed into the heat medium relay unit 3 is split into branch streams, which respectively pass through the second refrigerant flow switching device 18a and the second refrigerant flow switching device 18b into the intermediate heat exchanger 15a and the intermediate heat exchanger 15b.

The respective streams of high-temperature and high-pressure gas refrigerant having flowed into the intermediate heat exchanger 15a and the intermediate heat exchanger 15b turn into a high-pressure liquid refrigerant while rejecting heat to the heat medium circulating through the heat medium cycle circuit B. The respective streams of liquid refrigerant having flowed out of the intermediate heat exchanger 15a and the intermediate heat exchanger 15b are expanded in the expansion device 16a and the expansion device 16b, and turn into a low-temperature and low-pressure two-phase refrigerant. The resulting two-phase refrigerant flows out of the heat medium relay unit 3 through the opening and closing device 17b, and flows into the outdoor unit 1 again through the refrigerant pipe 4. The opening and closing device 17a is in its closed position at this time.

The refrigerant having flowed into the outdoor unit 1 passes through the backflow prevention device 13c and flows into the heat source-side heat exchanger 12 that acts as an evaporator. Then, the refrigerant having flowed into the heat source-side heat exchanger 12 removes heat from the outdoor air in the heat source-side heat exchanger 12, and turns into a low-temperature and low-pressure gas refrigerant. The low-temperature and low-pressure gas refrigerant having flowed out of the heat source-side heat exchanger 12 is sucked into the compressor 10 again via the first refrigerant flow switching device 11 and the accumulator 19.

At this time, the second refrigerant flow switching device 18a and the second refrigerant flow switching device 18b each communicate to a high pressure-side pipe. Further, the opening degree of the expansion device 16a is controlled such that the subcooling (degree of subcooling) obtained as the difference between a value obtained by converting the pressure detected by the pressure sensor 36a into a saturation temperature, and the temperature detected by the third temperature sensor 35b is constant. Similarly, the opening degree of the expansion device 16b is controlled such that the subcooling obtained as the difference between a value obtained by converting the pressure detected by the pressure sensor 36b into a saturation temperature, and the temperature detected by the third temperature sensor 35d is constant. When the temperature at the middle position of the intermediate heat exchanger 15 can be measured, the temperature at the middle position may be used instead of the pressure sensors 36. Thus, the system may be configured in an inexpensive manner.

Next, the flow of the heat medium in the heat medium cycle circuit B is described.

In the heating only operation mode, the heating energy of the heat source-side refrigerant is transferred to the heat medium in both the intermediate heat exchanger 15a and the intermediate heat exchanger 15b, and the heated heat medium is caused to flow in the heat medium pipe 5 by the pump 21a and the pump 21b. The respective streams of the heat medium having been pressurized by the pump 21a and the pump 21b and having flowed out flow into the use-side heat exchanger 26a and the use-side heat exchanger 26b via the heat medium pipe 5 and via the second heat medium flow switching device 23a and the second heat medium flow switching device 23b that are located in the branch unit 40. Then, the respective streams of the heat medium reject heat to the indoor air in the use-side heat exchanger 26a and the use-side heat exchanger 26b to heat the indoor space 7.

Then, the respective streams of the heat medium flow out of the use-side heat exchanger 26a and the use-side heat exchanger 26b, and flow into the heat medium flow control device 25a and the heat medium flow control device 25b. At this time, in order to provide the air conditioning load required for the indoor space, the heat medium flow control device 25a and the heat medium flow control device 25b have their opening degree controlled such that the difference in temperature between the value detected by the first temperature sensor 31 and the value detected by the second temperature sensor 34 has a predetermined value (for example, 5 degrees Celsius to 10 degrees Celsius).

Specifically, when the temperature difference is smaller than a predetermined value, the heat medium flow control device 25a and the heat medium flow control device 25b have their opening degree controlled toward a close position. When the temperature difference is greater than a predetermined value, their opening degree is controlled toward an open position. As described above, the heat medium is caused to flow into each of the use-side heat exchanger 26a and the use-side heat exchanger 26b after being controlled to a flow rate that is required in accordance with the air conditioning load required for the indoor space. The respective streams of the heat medium having flowed out of the first heat medium flow switching device 22a and the first heat medium flow switching device 22b flow out of the branch unit 40, and then are routed through the heat medium pipe 5 into the intermediate heat exchanger 15a and the intermediate heat exchanger 15b and sucked into the pump 21a and the pump 21b again.

Within the heat medium pipe 5 of the use-side heat exchanger 26, the heat medium flows in such a direction that the heat medium travels from the second heat medium flow switching device 23 to the first heat medium flow switching device 22 via the heat medium flow control device 25. The air conditioning load required for the indoor space 7 can be provided by performing a control such that the difference between the temperature detected by the first temperature sensor 31a or the temperature detected by the first temperature sensor 31b, and the temperature detected by the second temperature sensor 34 is maintained at a predetermined value (for example, about 5 degrees Celsius to 10 degrees Celsius). As the outlet temperature of the intermediate heat exchanger 15, one of the temperature detected by the first temperature sensor 31a and the temperature detected by the first temperature sensor 31b may be used, or the mean of the two temperatures may be used. At this time, the first heat medium flow switching device 22 and the second heat medium flow switching device 23 are controlled to an intermediate opening degree to secure flow paths leading to both the intermediate heat exchanger 15a and the intermediate heat exchanger 15b.

It is normally required that the use-side heat exchanger 26a be controlled based on the temperature difference between the inlet and outlet of the use-side heat exchanger 26a. In this regard, the temperature of the heat medium on the inlet side of the use-side heat exchanger 26 is substantially equal to the temperature detected by the first temperature sensor 31b. Thus, through use of the first temperature sensor 31b, it is possible to reduce the number of temperature sensors. Thus, the system may be configured in an inexpensive manner.

In executing the heating only operation mode, there is no need to pass the heat medium to the use-side heat exchanger 26 in which no thermal load exists (including thermo-OFF). Accordingly, the flow path to the corresponding use-side heat exchanger 26 is closed by the heat medium flow control device 25 so that the heat medium is prevented from flowing to the use-side heat exchanger 26 in which no thermal load exists. In Fig. 4, a thermal load is generated in the use-side heat exchanger 26a and the use-side heat exchanger 26b, and hence the heat medium is passed to these heat exchangers. In contrast, no thermal load is generated in the use-side heat exchanger 26c and the use-side heat exchanger 26d, and hence the corresponding heat medium flow control devices 25c and 25d are fully closed. When a thermal load is generated in the use-side heat exchanger 26c or the use-side heat exchanger 26d, the heat medium flow control device 25c or the heat medium flow control device 25d may be opened to allow the heat medium to circulate.

### [Cooling Main Operation Mode]

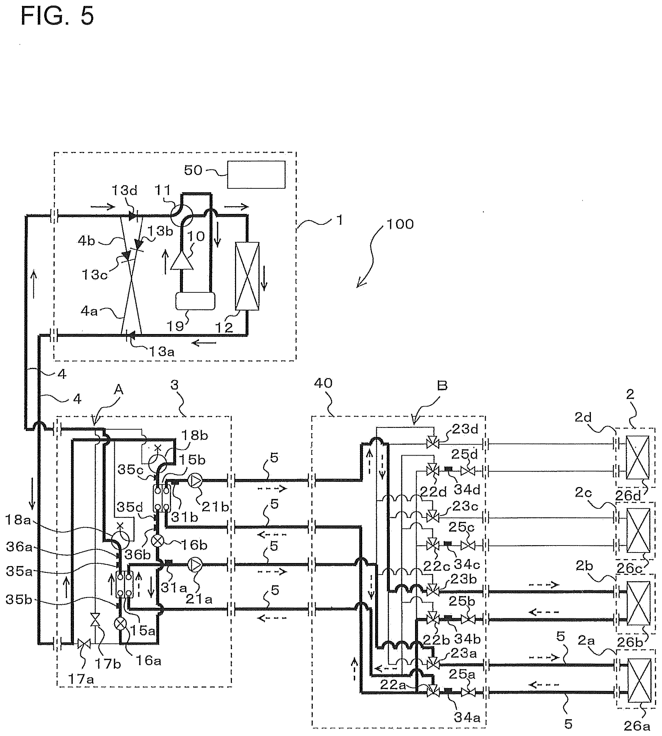

Fig. 5 is a refrigerant circuit diagram for illustrating the flow of refrigerant in the cooling main operation mode of the air-conditioning apparatus 100. In Fig. 5, the cooling main operation mode is described with an exemplary case in which a cooling load is generated in the use-side heat exchanger 26a and a heating load is generated in the use-side heat exchanger 26b. In Fig. 5, pipes indicated by the thick lines represent pipes through which the refrigerant (heat source-side refrigerant and heat medium) circulates. In Fig. 5, the flow direction of the heat source-side refrigerant is indicated by the solid arrows, and the flow direction of the heat medium is indicated by the broken arrows.

In the case of the cooling main operation mode illustrated in Fig. 5, in the outdoor unit 1, the first refrigerant flow switching device 11 is switched such that the heat source-side refrigerant having been discharged from the compressor 10 is routed into the heat source-side heat exchanger 12. In the heat medium relay unit 3, the pump 21a and the pump 21b are driven. In the branch unit 40, the heat medium flow control device 25a and the heat medium flow control device 25b are opened, and the heat medium flow control device 25c and the heat medium flow control device 25d are fully closed. With this action, the heat medium circulates between the intermediate heat exchanger 15a and the use-side heat exchanger 26a and between the intermediate heat exchanger 15b and the use-side heat exchanger 26b.

First, the flow of the heat source-side refrigerant in the refrigerant cycle circuit A is described.

A low-temperature and low-pressure refrigerant is compressed by the compressor 10, and is discharged as a high-temperature and high-pressure gas refrigerant. The high-temperature and high-pressure gas refrigerant having been discharged from the compressor 10 flows into the heat source-side heat exchanger 12 via the first refrigerant flow switching device 11. In the heat source-side heat exchanger 12, the refrigerant changes to a liquid refrigerant while rejecting heat to the outdoor air. The refrigerant having flowed out of the heat source-side heat exchanger 12 flows out of the outdoor unit 1, passes through the backflow prevention device 13a and the refrigerant pipe 4, and then flows into the heat medium relay unit 3. The refrigerant having flowed into the heat medium relay unit 3 passes through the second refrigerant flow switching device 18b and flows into the intermediate heat exchanger 15b that acts as a condenser.

The refrigerant having flowed into the intermediate heat exchanger 15b is further lowered in temperature while rejecting heat to the heat medium circulating through the heat medium cycle circuit B. The refrigerant having flowed out of the intermediate heat exchanger 15b is expanded in the expansion device 16b and turns into a low-pressure two-phase refrigerant. The low-pressure two-phase refrigerant flows into the intermediate heat exchanger 15a that acts as an evaporator via the expansion device 16a. The low-pressure two-phase refrigerant having flowed into the intermediate heat exchanger 15a removes heat from the heat medium circulating through the heat medium cycle circuit B and thus turns into a low-pressure gas refrigerant while cooling the heat medium. The gas refrigerant flows out of the intermediate heat exchanger 15a, and then flows out of the heat medium relay unit 3 via the second refrigerant flow switching device 18a. The gas refrigerant then travels through the refrigerant pipe 4, and flows into the outdoor unit 1 again. The refrigerant having flowed into the outdoor unit 1 is sucked into the compressor 10 again via the backflow prevention device 13d, the first refrigerant flow switching device 11, and the accumulator 19.

At this time, the second refrigerant flow switching device 18a communicates to a low pressure-side pipe, and the second refrigerant flow switching device 18b communicates to a high pressure-side pipe. Further, the opening degree of the expansion device 16b is controlled such that the superheat obtained as the difference between the temperature detected by the third temperature sensor 35a, and the temperature detected by the third temperature sensor 35b is constant. The expansion device 16a is in its fully opened state, and the opening and closing device 17b is in its closed state at this time. Alternatively, the opening degree of the expansion device 16b may be controlled such that the subcooling obtained as the difference between a value obtained by converting the pressure detected by the pressure sensor 36b into a saturation temperature, and the temperature detected by the third temperature sensor 35d is constant. Alternatively, the expansion device 16b may be fully opened, and the superheat or subcooling may be controlled by using the expansion device 16a.

Next, the flow of the heat medium in the heat medium cycle circuit B is described.

In the cooling main operation mode, the heating energy of the heat source-side refrigerant is transferred to the heat medium in the intermediate heat exchanger 15b, and the heated heat medium is caused to flow within the heat medium pipe 5 by the pump 21b. Further, in the cooling main operation mode, the cooling energy of the heat source-side refrigerant is transferred to the heat medium in the intermediate heat exchanger 15a, and the cooled heat medium is caused to flow within the heat medium pipe 5 by the pump 21a. The respective streams of the heat medium having been pressurized by the pump 21a and the pump 21b and having flowed out flow into the use-side heat exchanger 26a and the use-side heat exchanger 26b via the heat medium pipe 5 and via the second heat medium flow switching device 23a and the second heat medium flow switching device 23b that are located in the branch unit 40.

In the use-side heat exchanger 26b, the heat medium rejects heat to the indoor air to heat the indoor space 7. In the use-side heat exchanger 26a, the heat medium removes heat from the indoor air to cool the indoor space 7. At this time, in order to provide the air conditioning load required for the indoor space, the heat medium flow control device 25a and the heat medium flow control device 25b have their opening degree controlled such that the difference in temperature between the value detected by the second temperature sensor 34a and the value detected by the first temperature sensor 31a has a predetermined value (for example, about 5 degrees Celsius to 10 degrees Celsius).

Specifically, when the difference between the temperature detected by the first temperature sensor 31b and the temperature detected by the second temperature sensor 34b is smaller than a predetermined value (for example, about 5 degrees Celsius to 10 degrees Celsius), the heat medium flow control device 25a and the heat medium flow control device 25b have their opening degree controlled toward a close position. When the temperature difference is greater than a predetermined value, their opening degree is controlled toward an open position. As described above, the heat medium is caused to flow into each of the use-side heat exchanger 26a and the use-side heat exchanger 26b after being controlled to a flow rate that is required in accordance with the air conditioning load required for the indoor space.

The heat medium having passed through the use-side heat exchanger 26b and slightly lowered in temperature passes through the heat medium flow control device 25b and the first heat medium flow switching device 22b and flows out of the branch unit 40. Then, the heat medium flows into the intermediate heat exchanger 15b via the heat medium pipe 5, and is sucked into the pump 21b again. The heat medium having passed through the use-side heat exchanger 26a and slightly raised in temperature passes through the heat medium flow control device 25a and the first heat medium flow switching device 22a and flows out of the branch unit 40. Then, the heat medium flows into the intermediate heat exchanger 15a via the heat medium pipe 5, and is sucked into the pump 21a again.

In the meantime, the warm heat medium and the cold heat medium are respectively introduced to the use-side heat exchanger 26 in which a heating load exists and the use-side heat exchanger 26 in which a cooling load exists, without mixing together, by the action of the first heat medium flow switching device 22 and the second heat medium flow switching device 23. Within the heat medium pipe 5 of the use-side heat exchanger 26, on both the heating and cooling sides, the heat medium flows in such a direction that the heat medium travels from the second heat medium flow switching device 23 to the first heat medium flow switching device 22 via the heat medium flow control device 25. The air conditioning load required for the indoor space 7 can be provided by controlling, on the heating side, the difference between the temperature detected by the first temperature sensor 31b and the temperature detected by the second temperature sensor 34b, and by controlling, on the cooling side, the difference between the temperature detected by the second temperature sensor 34b and the temperature detected by the first temperature sensor 31a, such that each of these temperature differences is maintained at a predetermined value (for example, about 5 degrees Celsius to 10 degrees Celsius).

In executing the cooling main operation mode, there is no need to pass the heat medium to the use-side heat exchanger 26 in which no thermal load exists (including thermo-OFF). Accordingly, the flow path to the corresponding use-side heat exchanger 26 is closed by the heat medium flow control device 25 so that the heat medium is prevented from flowing to the use-side heat exchanger 26 in which no thermal load exists. In Fig. 5, a thermal load is generated in the use-side heat exchanger 26a and the use-side heat exchanger 26b, and hence the heat medium is passed to these heat exchangers. In contrast, no thermal load is generated in the use-side heat exchanger 26c and the use-side heat exchanger 26d, and hence the corresponding heat medium flow control devices 25c and 25d are fully closed. When a thermal load is generated in the use-side heat exchanger 26c or the use-side heat exchanger 26d, the heat medium flow control device 25c or the heat medium flow control device 25d may be opened to allow the heat medium to circulate.

### [Heating Main Operation Mode]

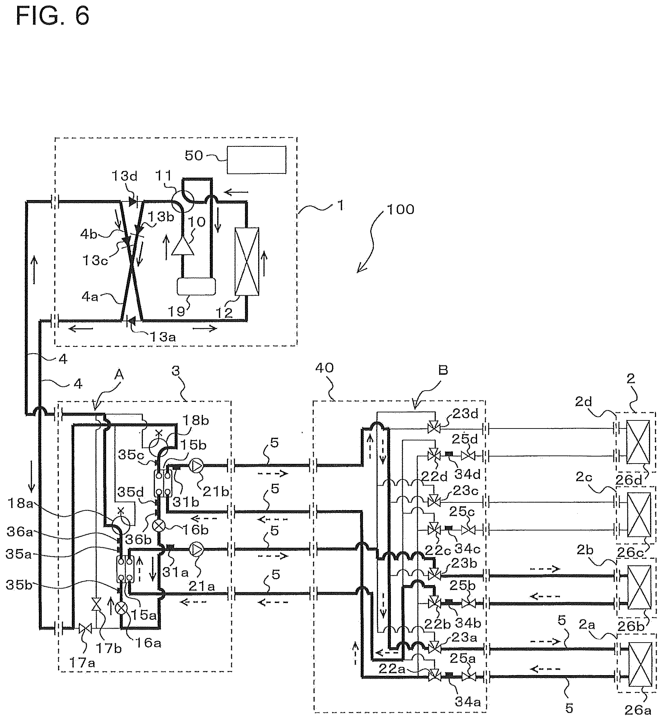

Fig. 6 is a refrigerant circuit diagram for illustrating the flow of refrigerant in the heating main operation mode of the air-conditioning apparatus 100. With reference to Fig. 6, the heating main operation mode is described with an exemplary case in which a heating load is generated in the use-side heat exchanger 26a and a cooling load is generated in the use-side heat exchanger 26b. In Fig. 6, pipes indicated by the thick lines represent pipes through which the refrigerant (heat source-side refrigerant and heat medium) circulates. In Fig. 6, the flow direction of the heat source-side refrigerant is indicated by the solid arrows, and the flow direction of the heat medium is indicated by the broken arrows.

In the case of the heating main operation mode illustrated in Fig. 6, in the outdoor unit 1, the first refrigerant flow switching device 11 is switched such that the heat source-side refrigerant having been discharged from the compressor 10 is caused to flow into the heat medium relay unit 3 without passing through the heat source-side heat exchanger 12. In the heat medium relay unit 3, the pump 21a and the pump 21b are driven. In the branch unit 40, the heat medium flow control device 25a and the heat medium flow control device 25b are opened, and the heat medium flow control device 25c and the heat medium flow control device 25d are fully closed. With this action, the heat medium circulates between the intermediate heat exchanger 15a and the use-side heat exchanger 26b, and between the intermediate heat exchanger 15b and the use-side heat exchanger 26a.

First, the flow of the heat source-side refrigerant in the refrigerant cycle circuit A is described.

A low-temperature and low-pressure refrigerant is compressed by the compressor 10, and is discharged as a high-temperature and high-pressure gas refrigerant. The high-temperature and high-pressure gas refrigerant having been discharged from the compressor 10 passes through the first refrigerant flow switching device 11 and the backflow prevention device 13b, and flows out of the outdoor unit 1. The high-temperature and high-pressure gas refrigerant having flowed out of the outdoor unit 1 passes through the refrigerant pipe 4 into the heat medium relay unit 3. The high-temperature and high-pressure gas refrigerant having flowed into the heat medium relay unit 3 passes through the second refrigerant flow switching device 18b, and flows into the intermediate heat exchanger 15b that acts as a condenser.

The gas refrigerant having flowed into the intermediate heat exchanger 15b turns into a liquid refrigerant while rejecting heat to the heat medium circulating through the heat medium cycle circuit B. The refrigerant having flowed out of the intermediate heat exchanger 15b is expanded in the expansion device 16b and turns into a low-pressure two-phase refrigerant. The low-pressure two-phase refrigerant flows into the intermediate heat exchanger 15a that acts as an evaporator via the expansion device 16a. The low-pressure two-phase refrigerant having flowed into the intermediate heat exchanger 15a removes heat from the heat medium circulating through the heat medium cycle circuit B. With this action, the refrigerant is evaporated to cool the heat medium. The low-pressure two-phase refrigerant flows out of the intermediate heat exchanger 15a, and then flows out of the heat medium relay unit 3 via the second refrigerant flow switching device 18a. The low-pressure two-phase refrigerant then flows into the outdoor unit 1 again.

The refrigerant having flowed into the outdoor unit 1 passes through the backflow prevention device 13c and flows into the heat source-side heat exchanger 12 that acts as an evaporator. Then, the refrigerant having flowed into the heat source-side heat exchanger 12 removes heat from the outdoor air in the heat source-side heat exchanger 12, and turns into a low-temperature and low-pressure gas refrigerant. The low-temperature and low-pressure gas refrigerant having flowed out of the heat source-side heat exchanger 12 is sucked into the compressor 10 again via the first refrigerant flow switching device 11 and the accumulator 19.

At this time, the second refrigerant flow switching device 18a communicates to a low pressure-side pipe, and the second refrigerant flow switching device 18b communicates to a high pressure-side pipe. Further, the opening degree of the expansion device 16b is controlled such that the subcooling obtained as the difference between a value obtained by converting the pressure detected by the pressure sensor 36b into a saturation temperature, and the temperature detected by the third temperature sensor 35b is constant. The expansion device 16a is in its fully opened state, and the opening and closing device 17a is in its closed state at this time. Alternatively, the expansion device 16b may be fully opened, and the subcooling may be controlled by using the expansion device 16a.

Next, the flow of the heat medium in the heat medium cycle circuit B is described.

In the heating main operation mode, the heating energy of the heat source-side refrigerant is transferred to the heat medium in the intermediate heat exchanger 15b, and the heated heat medium is caused to flow within the heat medium pipe 5 by the pump 21b. In the heating main operation mode, the cooling energy of the heat source-side refrigerant is transferred to the heat medium in the intermediate heat exchanger 15a, and the cooled heat medium is caused to flow within the heat medium pipe 5 by the pump 21a. The respective streams of the heat medium having been pressurized the pump 21a and the pump 21b and having flowed out flow into the use-side heat exchanger 26a and the use-side heat exchanger 26b via the heat medium pipe 5 and via the second heat medium flow switching device 23a and the second heat medium flow switching device 23b that are located in the branch unit 40.

In the use-side heat exchanger 26a, the heat medium rejects heat to the indoor air to heat the indoor space 7. In the use-side heat exchanger 26b, the heat medium removes heat from the indoor air to cool the indoor space 7. At this time, in order to provide the air conditioning load required for the indoor space, the heat medium flow control device 25a and the heat medium flow control device 25b have their opening degree controlled such that the difference in temperature between the value detected by the second temperature sensor 34b and the value detected by the first temperature sensor 31a has a predetermined value (for example, about 5 degrees Celsius to 10 degrees Celsius).

Specifically, when the difference between the temperature detected by the first temperature sensor 31b and the temperature detected by the second temperature sensor 34a is smaller than a predetermined value (for example, about 5 degrees Celsius to 10 degrees Celsius), the heat medium flow control device 25a and the heat medium flow control device 25b have their opening degree controlled toward a close position. When the temperature difference is greater than a predetermined value, their opening degree is controlled toward an open position. In this way, the heat medium is caused to flow into each of the use-side heat exchanger 26a and the use-side heat exchanger 26b after being controlled to a flow rate that is required in accordance with the air conditioning load required for the indoor space.

The heat medium having passed through the use-side heat exchanger 26a and now at a slightly lowered temperature passes through the heat medium flow control device 25a and the first heat medium flow switching device 22a and flows out of the branch unit 40. Then, the heat medium flows into the intermediate heat exchanger 15b via the heat medium pipe 5, and is sucked into the pump 21b again. The heat medium having passed through the use-side heat exchanger 26b and slightly raised in temperature passes through the heat medium flow control device 25b and the first heat medium flow switching device 22b and flows out of the branch unit 40. Then, the heat medium flows into the intermediate heat exchanger 15a via the heat medium pipe 5, and is sucked into the pump 21a again.

In the meantime, the warm heat medium and the cold heat medium are respectively introduced to the use-side heat exchanger 26 in which a heating load exists and the use-side heat exchanger 26 in which a cooling load exists, without mixing together, by the action of the first heat medium flow switching device 22 and the second heat medium flow switching device 23. Within the heat medium pipe 5 of the use-side heat exchanger 26, on both the heating and cooling sides, the heat medium flows in such a direction that the heat medium travels from the second heat medium flow switching device 23 to the first heat medium flow switching device 22 via the heat medium flow control device 25. The air conditioning load required for the indoor space 7 can be provided by controlling, on the heating side, the difference between the temperature detected by the first temperature sensor 31b and the temperature detected by the second temperature sensor 34, and by controlling, on the cooling side, the difference between the temperature detected by the second temperature sensor 34 and the temperature detected by the first temperature sensor 31a, such that each of these temperature differences is maintained at a predetermined value (for example, about 5 degrees Celsius to 10 degrees Celsius).

In executing the heating main operation mode, there is no need to pass the heat medium to the use-side heat exchanger 26 in which no thermal load exists (including thermo-OFF). Accordingly, the flow path to the corresponding use-side heat exchanger 26 is closed by the heat medium flow control device 25 so that the heat medium is prevented from flowing to the use-side heat exchanger 26 in which no thermal load exists. In Fig. 6, a thermal load is generated in the use-side heat exchanger 26a and the use-side heat exchanger 26b, and hence the heat medium is passed to these heat exchangers. In contrast, no thermal load is generated in the use-side heat exchanger 26c and the use-side heat exchanger 26d, and hence the corresponding heat medium flow control devices 25c and 25d are fully closed. When a thermal load is generated in the use-side heat exchanger 26c or the use-side heat exchanger 26d, the heat medium flow control device 25c or the heat medium flow control device 25d may be opened to allow the heat medium to circulate.

As described above, according to Embodiment 1, the outdoor unit 1, the indoor unit 2, the heat medium relay unit 3, and the branch unit 40 are constructed with separate housings. The outdoor unit 1 and the heat medium relay unit 3, which are connected by the refrigerant pipe 4 and through which the refrigerant passes, are arranged in a space (for example, outdoor space 6, or space 41 such as a machine room with a vent opening) separated from the indoor space 7. The branch unit 40 connected to the heat medium relay unit 3 by the heat medium pipe 5 is arranged in the space 8 located inside the building 9, such as a space above a ceiling. The indoor unit 2 connected to the branch unit 40 by the heat medium pipe 5 is arranged in the indoor space 7.

As described above, devices and pipes through which the refrigerant passes are arranged in a space separated from the indoor space 7. In other words, the refrigerant cycle circuit A is arranged in a space separated from the indoor space 7. This ensures that, even when refrigerant leaks from the refrigerant cycle circuit A, the refrigerant is prevented from directly flowing into the indoor space 7. With this configuration, it is possible to prevent entry of refrigerant into the indoor space 7 when a leakage of refrigerant develops in each of the outdoor unit 1, the heat medium relay unit 3, and the refrigerant pipe 4, thereby ensuring safety against adverse effects on human body in the indoor space 7 and against ignition.

One conceivable way to prevent entry of refrigerant into the indoor space 7 in the event of leakage of refrigerant from the refrigerant cycle circuit A is to, for example, arrange the entire heat medium relay unit according to Patent Literature 1 in the outdoor space 6. However, this configuration results in increased distance between the heat medium relay unit and the indoor unit, which potentially leads to increased complexity of routing of the heat medium pipe. In contrast, in Embodiment 1, the portion through which both the refrigerant and the heat medium pass (heat medium relay unit 3), and the portion through which only the heat medium passes (branch unit 40) are formed as separate components. With this configuration, the heat medium relay unit 3 can solely be arranged in the outdoor space 6, and the branch unit 40 can be arranged closer to the indoor unit 2 than the heat medium relay unit 3 is to the indoor unit 2. Therefore, it is possible to reduce the problem of increased complexity of routing of the heat medium pipe.

The branch unit 40 with simple heat medium pipe connections is located between the heat medium relay unit 3 and the plurality of indoor units 2. With this configuration, it is possible to simplify the configuration of the heat medium pipe 5, which can become more complex as a result of the increased distance between the intermediate heat exchanger 15 and each indoor unit 2. That is, when the heat medium relay unit 3 is to be connected to each of the plurality of the indoor units 2, which can be arranged at a location distant from the heat medium relay unit 3, by using the heat medium pipe 5 that is split into branches, for example, the branch unit 40 can be arranged at the midpoint between the respective locations of the plurality of indoor units 2. This leads to reduced length of and increased freedom of routing of the heat medium pipe 5 that connects the branch unit 40 to each indoor unit 2, thereby allowing simplification of the heat medium pipe 5.

The heat medium is supplied to each indoor unit 2 by using the branch unit 40. With this configuration, it is possible to reliably prevent the refrigerant from travelling into the living space, and to reduce the size of the heat medium relay unit 3 or the branch unit 40, thereby being capable of increasing the freedom of installation of the branch unit 40.

As described above, the intermediate heat exchanger 15 has a structure that prevents the refrigerant in the refrigerant flow path and the heat medium in the heat medium flow path from mixing together, such as that of a double-wall plate heat exchanger. This ensures that, when the refrigerant leaks out from the refrigerant pipe of the intermediate heat exchanger 15, the leaked refrigerant is prevented from flowing out to the heat medium pipe, thereby being capable of preventing entry of refrigerant into the indoor space 7.

The heat medium flow control devices 25 (25a to 25d) are used to regulate the flow rate of the heat medium supplied to the use-side heat exchanger 26. With this configuration, it is possible to process an air conditioning load required for the indoor space.

In regulating the flow rate of the heat medium, the flow rate is regulated by controlling the opening degree of the heat medium flow control devices 25 (25a to 25d) such that the absolute value of the temperature difference between the value detected by the first temperature sensor 31 and the value detected by the second temperature sensor 34 is equal to a predetermined value (for example, about 5 degrees Celsius to 10 degrees Celsius). In this way, it is possible to provide an air conditioning load required for the indoor space.

When the first heat medium flow regulating device and the second heat medium flow regulating device are integrated together (into a block) as described above, the required installation space can be reduced.

As described above, the outdoor unit 1 and the heat medium relay unit 3 are both arranged in a space such as outdoors and in close proximity to each other. As a result, the length of the refrigerant pipe 4 is reduced, thereby being capable of reducing the amount of refrigerant equivalent to the refrigerant pipe 4. For instance, when the length of the refrigerant pipe 4 is reduced by about 100 m for a building multi-air-conditioning unit with a capacity of from 8 HP to 20 HP that uses an R410A refrigerant, the amount of refrigerant can be reduced by from about 11 kg to about 23 kg. In this way, it is possible to reduce adverse effects on global warming when the refrigerant leaks due to an accident such as pipe breakage.

For instance, the global warming potential GWP, which is a measure of how much a refrigerant gas or other emissions affect global warming with CO₂ given a reference value of 1, is 2090 for R410A. Accordingly, a reduction of from about 11 kg to about 23 kg of refrigerant translates into a reduction in CO₂ equivalent, which is calculated by multiplying the GWP by the amount of refrigerant, of from about 22.99 tons to about 48.07 tons.

### (Another Exemplary Installation according to Embodiment 1)

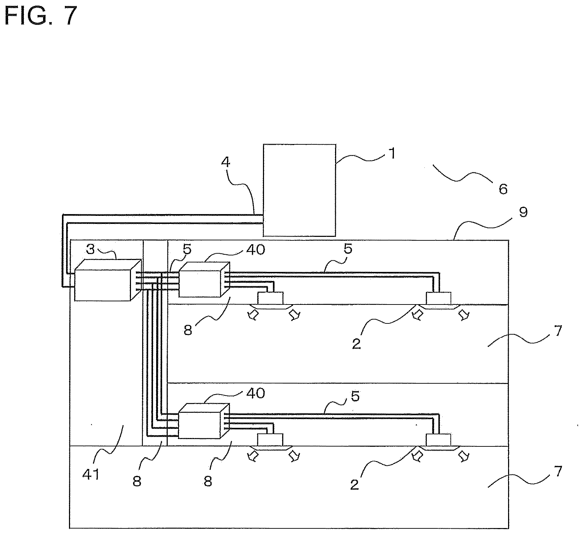

Fig. 7 is a diagram for illustrating another exemplary installation of the air-conditioning apparatus according to Embodiment 1 of the present invention. In Fig. 7, a single heat medium relay unit 3 is arranged in the space 41 (for example, machine room with a vent opening (not shown)) that is separated from the indoor space 7 and from the space 8 such as a space above a ceiling. A total of four indoor units 2 are provided on the first and second floors, and a total of two branch units 40, one for the space 8 on each floor, are provided. The single heat medium relay unit 3 is connected to the branch unit 40 on each floor by the heat medium pipe 5 that is split into branches, and the indoor unit on each floor is connected to the branch unit 40 on the same floor by the heat medium pipe 5. Fig. 7 is an illustration of an exemplary installation with a single heat medium relay unit 3, two branch units 40, and four indoor units 2. However, the configuration is not limited thereto. The respective numbers of these units may be determined in accordance with the building 9 in which the air-conditioning apparatus is arranged.

As described above, the heat medium relay unit 3 is arranged in the space 41 which is located inside the building 9 and separated from the indoor space 7 and the space 8. As with Fig. 1, with this configuration, it is possible to prevent entry of refrigerant into the indoor space 7 when a leakage of refrigerant develops in each of the outdoor unit 1, the heat medium relay unit 3, and the refrigerant pipe 4, thereby ensuring safety against adverse effects on human body in the indoor space 7 and against ignition.

In cases such as when there are many indoor units 2 to be arranged on each floor, the branch unit 40 is arranged on each floor as described above. This eliminates the need to connect the branch unit 40 and the indoor unit 2 that are located on different floors, thereby allowing easy installation of the heat medium pipe 5.

### Embodiment 2

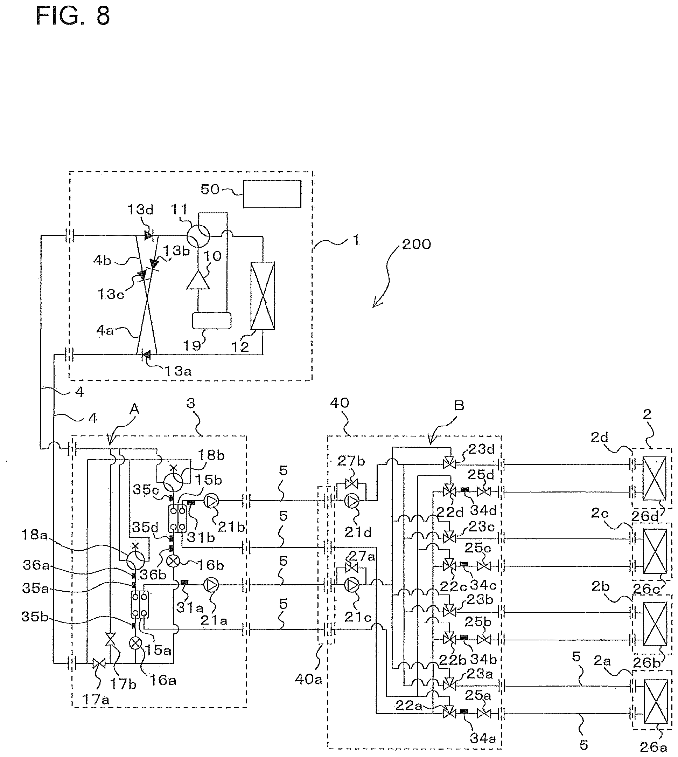

Fig. 8 is a diagram for illustrating an exemplary configuration of the refrigerant circuit of an air-conditioning apparatus according to Embodiment 2 of the present invention. An air-conditioning apparatus 200 is described below with reference to Fig. 8. In Fig. 8, parts having the same configurations as those in the air-conditioning apparatus 100 illustrated in Fig. 2 are denoted by the same reference symbols to omit the description thereof, and only differences are described. The following description mainly focuses on differences of Embodiment 2 from Embodiment 1.

The air-conditioning apparatus 200 illustrated in Fig. 8 includes, in addition to the pump 21a and the pump 21b arranged in the heat medium relay unit 3, an auxiliary pump 21c and an auxiliary pump 21d arranged in the branch unit 40 to supplement the power for conveying the heat medium. The auxiliary pump 21c is arranged in the portion of the heat medium pipe 5 between the second heat medium flow switching device 23 and a connection port, which is one of the connection ports 40a of the branch unit 40 for connection with the heat medium relay unit 3 and allows the heat medium having flowed out from the pump 21a of the heat medium relay unit 3 to flow into the branch unit 40. Further, the auxiliary pump 21d is arranged in the portion of the heat medium pipe 5 between the second heat medium flow switching device 23 and a connection port, which is one of the connection ports 40a of the branch unit 40 for connection with the heat medium relay unit 3 and allows the heat medium having flowed out from the pump 21b of the heat medium relay unit 3 to flow into the branch unit 40.

A heat medium bypass valve 27a is connected in parallel to the auxiliary pump 21c, and a heat medium bypass valve 27b is connected in parallel to the auxiliary pump 21d. It is preferred that the heat medium bypass valve 27a and the heat medium bypass valve 27b each be constructed by a two-way valve or a valve whose flow path can be opened and closed, such as a solenoid valve.

Now, suppose that it is determined during each operation mode that there is not enough power to convey the heat medium based on the difference in heat medium temperature between the outlet and inlet of the use-side heat exchanger 26 included in the indoor unit 2 that is performing cooling or heating. In this case, the auxiliary pump 21c and the auxiliary pump 21d may be driven. Whether there is not enough power to convey the heat medium may be determined as follows. That is, it is determined that there is not enough power to convey the heat medium when, in the case of cooling, the temperature difference between the value detected by the second temperature sensor 34 and the value detected by the first temperature sensor 31 is greater than a predetermined value (for example, about 5 degrees Celsius to 10 degrees Celsius), or when, in the case of heating, the temperature difference between the value detected by the first temperature sensor 31 and the value detected by the second temperature sensor 34 is greater than the predetermined value. In other words, it is determined that there is not enough power to convey the heat medium when the absolute value of the temperature difference between the value detected by the first temperature sensor 31 and the value detected by the second temperature sensor 34 is greater than a predetermined value (for example, about 5 degrees Celsius to 10 degrees Celsius). While the auxiliary pump 21c and the auxiliary pump 21d are running, the heat medium bypass valve 27a and the heat medium bypass valve 27b are in their closed position.

When the difference in heat medium temperature between the outlet and inlet of the use-side heat exchanger 26 is smaller than a predetermined value (for example, about 5 degrees Celsius to 10 degrees Celsius), the auxiliary pump 21c and the auxiliary pump 21d are stopped, and the heat medium bypass valve 27a and the heat medium bypass valve 27b are opened. In this way, it is possible to reduce pressure loss that occurs when the respective streams of the heat medium having flowed out of the pump 21b and the pump 21a pass through the auxiliary pump 21c and the auxiliary pump 21d, thereby suppressing decreases in flow rate of the pump 21b and the pump 21a. In this way, through suppression of decreases in flow rate of the pump 21b and the pump 21a, it is possible to eliminate the need to unnecessarily drive the auxiliary pump 21c and the auxiliary pump 21d for regions where there is no shortage of power to convey the heat medium in the absence of the auxiliary pump 21c and the auxiliary pump 21d. As a result, it is possible to achieve energy saving.

Through arrangement of the auxiliary pump 21c and the auxiliary pump 21d in the branch unit 40, the following effect can be obtained. Specifically, when the heat medium relay unit 3 is arranged in the space 41, which is located at an end of the interior space of the building 9, or in the outdoor space 6, and thus the length of the heat medium pipe 5 between the heat medium relay unit 3 and the indoor unit 2 increases (for example, a pipe length after the branch point of 40 m or more or a height between two indoor units of 15 m or more, which represents an installation limit for general building multi-air-conditioning units manufactured by Mitsubishi Electric Corporation), in a case in which the pump 21b and the pump 21a arranged in the heat medium relay unit 3 do not provide enough power to convey the heat medium, the auxiliary pump 21c and the auxiliary pump 21d are able to supplement the power for conveying the heat medium. The auxiliary pump 21c and the auxiliary pump 21d are arranged to supplement the power for conveying the heat medium as described above, and hence the indoor unit 2 can be arranged at a location distant from the heat medium relay unit 3. Further, this configuration allows a greater number of indoor units 2 to be connected. As a result, the freedom of installation of the indoor unit 2 is increased, and hence it is possible to build a simplified air-conditioning system.

The foregoing description is directed to an exemplary configuration with a single auxiliary pump 21c, a single auxiliary pump 21d, a single heat medium bypass valve 27a, and a single heat medium bypass valve 27b. However, the number of each of these components used is not limited thereto and may be more than one.

### [Refrigerant Pipe 4]

As described above, the air-conditioning apparatus 100 and the air-conditioning apparatus 200 each include several operation modes. In these operation modes, the heat source-side refrigerant flows through the refrigerant pipe 4 that connects the outdoor unit 1 and the heat medium relay unit 3 to each other.

### [Heat Medium Pipe 5]

In several operation modes executed by the air-conditioning apparatus 100 and the air-conditioning apparatus 200, the heat medium such as water or antifreeze liquid flows through the heat medium pipe 5 that connects the heat medium relay unit 3 and the indoor unit 2 to each other, and through the heat medium pipe 5 that connects the branch unit 40 and the indoor unit 2 to each other.

### [Heat Source-side Refrigerant]

Examples of refrigerants that can be used as a heat source-side refrigerant include HF01234yf, HF01234ze, R32, HC, a refrigerant mixture of R32 and HF01234yf, and a refrigerant mixture including as its component at least one of the refrigerants mentioned above.

All of these refrigerants have flammability. When a plate-type heat exchanger is damaged due to freezing or other causes, there is a possibility of such a refrigerant flowing into the heat medium. In this regard, the air-conditioning apparatus 100 and the air-conditioning apparatus 200 are not prone to damage because the intermediate heat exchangers 15a and 15b are not prone to freezing. Moreover, the intermediate heat exchangers 15a and 15b have a structure that prevents the refrigerant and the heat medium from mixing together, such as that of a double-wall plate heat exchanger. That is, even when a flammable refrigerant is used, the risk of causing leakage of the refrigerant leaking to the air-conditioned space can be reduced.

### [Heat Medium]

Examples of the heat medium that can be used include brine (antifreeze liquid), water, a liquid mixture of brine and water, and a liquid mixture of water and an additive with a high anti-corrosion effect. Accordingly, use of such a highly safe heat medium contributes to improved safety even when the heat medium leaks out to the indoor space 7 via the indoor unit 2 in the air-conditioning apparatus 100 and the air-conditioning apparatus 200.

When the intermediate heat exchanger 15b and the intermediate heat exchanger 15a change in state (heating or cooling) in each of the cooling main operation mode and the heating main operation mode, a waste of energy occurs as previously warm water is cooled into cold water or as previously cold water is heated into warm water. Accordingly, the air-conditioning apparatus 100 and the air-conditioning apparatus 200 are configured to ensure that, in both the cooling main operation mode and the heating main operation mode, the intermediate heat exchanger 15b is on the heating side and the intermediate heat exchanger 15a is on the heating side at all times.

Further, when a heating load and a cooling load are generated in a mixed manner in the use-side heat exchanger 26, the heating operation and the cooling operation can be freely performed in each indoor unit 2 through the following control. That is, the first heat medium flow switching device 22 and the second heat medium flow switching device 23 that correspond to the use-side heat exchanger 26 that is performing heating are each switched to a flow path connected to the intermediate heat exchanger 15b used for heating. Further, the first heat medium flow switching device 22 and the second heat medium flow switching device 23 that correspond to the use-side heat exchanger 26 that is performing cooling are each switched to a flow path connected to the intermediate heat exchanger 15a used for cooling.

As described above, according to Embodiment 2, the same effect as that of Embodiment 1 is obtained. In addition, the auxiliary pump 21c and the auxiliary pump 21d are further provided to supplement the increased power for conveying the heat medium due to the increased length of the heat medium pipe 5.

In the above, description is made of the air-conditioning apparatus 100 and the air-conditioning apparatus 200 being capable of performing the cooling and heating mixed operation. However, the air-conditioning apparatus 100 and the air-conditioning apparatus 200 are not limited thereto. For example, the same effect as mentioned above can be obtained also for a configuration in which there are provided a single intermediate heat exchanger 15 and a single expansion device 16, a plurality of use-side heat exchangers 26 and a plurality of heat medium flow control devices 25 are connected in parallel to the intermediate heat exchanger 15 and the expansion device 16, and only one of the cooling operation and the heating operation can be executed.

It is common to mount an air-sending device to the heat source-side heat exchanger 12 and the use-side heat exchanger 26 to promote condensation or evaporation by means of air sent by the air-sending device. However, the configurations of the heat source-side heat exchanger 12 and the use-side heat exchanger 26 are not limited thereto. For example, as the use-side heat exchanger 26, a heat exchanger that utilizes radiation, such as a panel heater, can be used. Further, as the heat source-side heat exchanger 12, a water-cooled type heat exchanger that moves heat by means of water or antifreeze liquid can be used. That is, any type of the heat source-side heat exchanger 12 and use-side heat exchanger 26 can be used as long as their structure allows heat to be rejected or removed.

### Reference Signs List

1 outdoor unit 2 indoor unit 2a indoor unit 2b indoor unit 2c indoor unit 2d indoor unit 3 heat medium relay unit 3a connection port
4 refrigerant pipe 4a first connection pipe 4b second connection pipe 5 heat medium pipe 6 outdoor space 7 indoor space 8 space 9 building 10 compressor 11 first refrigerant flow switching device 12 heat source-side heat exchanger 13a backflow prevention device 13b backflow prevention device
13c backflow prevention device 13d backflow prevention device 15 intermediate heat exchanger 15a intermediate heat exchanger 15b intermediate heat exchanger 16 expansion device 16a expansion device
16b expansion device 17 opening and closing device 17a opening and closing device 17b opening and closing device 18 second refrigerant flow switching device 18a second refrigerant flow switching device 18b second refrigerant flow switching device 19 accumulator 21 pump 21a pump
21b pump 21c auxiliary pump 21d auxiliary pump 22 first heat medium flow switching device 22a first heat medium flow switching device
22b first heat medium flow switching device 22c first heat medium flow switching device 22d first heat medium flow switching device 23 second heat medium flow switching device 23a second heat medium flow switching device 23b second heat medium flow switching device 23c second heat medium flow switching device 23d second heat medium flow switching device 25 heat medium flow control device 25a heat medium flow control device25b heat medium flow control device 25c heat medium flow control device25d heat medium flow control device 26 use-side heat exchanger 26a use-side heat exchanger 26b use-side heat exchanger 26c use-side heat exchanger
26d use-side heat exchanger 27a heat medium bypass valve 27b heat medium bypass valve 31 first temperature sensor 31a first temperature sensor 31b first temperature sensor 34 second temperature sensor
34a second temperature sensor 34b second temperature sensor
34c second temperature sensor 34d second temperature sensor 35 third temperature sensor 35a third temperature sensor 35b third temperature sensor 35c third temperature sensor 35d third temperature sensor 36 pressure sensor 36a pressure sensor 36b pressure sensor 40 branch unit 40a connection port 40b connection port 41 space 50 controller
100 air-conditioning apparatus 200 air-conditioning apparatus A refrigerant cycle circuit B heat medium cycle circuit

## Claims

1. An air-conditioning apparatus (100), comprising:
an outdoor unit (1) including a compressor (10), and a heat source-side heat exchanger (12);
a heat medium relay unit (3) including an intermediate heat exchanger (15), an expansion device (16), and a pump (21a, 21b);
a branch unit (40) including a heat medium flow regulating device; and
at least one indoor unit (2) including a use-side heat exchanger (26),
wherein the compressor (10), the heat source-side heat exchanger (12), the expansion device (16), and a refrigerant flow path of the intermediate heat exchanger (15), are connected by a refrigerant pipe (4) to form a refrigerant cycle circuit (A) through which refrigerant circulates,
wherein a heat medium flow path of the intermediate heat exchanger (15), the branch unit (40), and the use-side heat exchanger (26) are connected by a heat medium pipe (5) to form a heat medium cycle circuit (B) through which a heat medium different from the refrigerant circulates, and
wherein the outdoor unit (1) and the heat medium relay unit (3) that form the refrigerant cycle circuit (A) are arranged in a space separated from an air-conditioned space (7), are formed as components separate from the branch unit (40) and the at least one indoor unit (2), are arranged in a space separated from the branch unit (40) and the at least one indoor unit (2),
**characterized in** one of the following:
- the outdoor unit (1) and the heat medium relay unit (3) are arranged in a space (6) outside a building; or
- the heat medium relay unit (3) is arranged in an indoor space (41) that is separated from any air-conditioned space (7) and from any space (8) above a ceiling of any air-conditioned space (7).

2. An air-conditioning apparatus (100) of claim 1, wherein the outdoor unit (1) further includes a first refrigerant flow switching device (11);
wherein the heat medium relay unit (3) further includes a second refrigerant flow switching device (18);
wherein the branch unit (40) further includes an auxiliary pump (21c, 21d); wherein the compressor (10), the first refrigerant flow switching device (11), the heat source-side heat exchanger (12), the expansion device (16), the refrigerant flow path of the intermediate heat exchanger (15), and the second refrigerant flow switching device (18) are connected by the refrigerant pipe (4) to form the refrigerant cycle circuit (A) through which refrigerant circulates,
wherein the heat medium flow regulating device of the branch unit (40) comprises at least:
a first heat medium flow regulating device (22, 25) arranged in a flow path through which the heat medium flows out of the use-side heat exchanger (26); and
a second heat medium flow regulating device (23) arranged in a flow path through which the heat medium flows into the use-side heat exchanger (26),
wherein the air-conditioning apparatus (100) further comprises:
an outflow temperature sensor (34) configured to detect a temperature of the heat medium flowing out of the use-side heat exchanger (26),
an inflow temperature sensor (31) configured to detect a temperature of the heat medium flowing into the use-side heat exchanger (26), and
a controller (50) configured to control an opening degree of the heat medium flow regulating device such that a difference between a value detected by the inflow temperature sensor (31) and a value detected by the outflow temperature sensor (34) has a predetermined value; and
wherein the auxiliary pump (21c, 21d) is configured to operate when a temperature difference between a value detected by the outflow temperature sensor (34) and a value detected by the inflow temperature sensor (31) is greater than the predetermined value, and is configured to stop when the temperature difference is smaller than the predetermined value.

3. The air-conditioning apparatus (100) of claim 1 or 2, wherein the intermediate heat exchanger (15) has a structure that prevents the refrigerant in the refrigerant flow path and the heat medium in the heat medium flow path from mixing together.

4. The air-conditioning apparatus (100) of any one of claims 1 to 3, wherein the heat medium flow regulating device is configured to regulate a flow rate of the heat medium supplied to the use-side heat exchanger (26).

5. The air-conditioning apparatus (100) of claim 2,
wherein the outflow temperature sensor (34) is arranged on the heat medium pipe (5) located between the first heat medium flow regulating device (22, 25) and the use-side heat exchanger (26) and inside the branch unit (40), and
wherein the inflow temperature sensor (31) is arranged on the heat medium pipe (5) located between the second heat medium flow regulating device (23) and the intermediate heat exchanger (15) and inside the heat medium relay unit (3), or on the heat medium pipe (5) located between the second heat medium flow regulating device (23) and the use-side heat exchanger (26) and inside the branch unit (40).

6. The air-conditioning apparatus (200) of claim 2, wherein the branch unit (40) includes, in addition to the pump (21a, 21b) located inside the heat medium relay unit (3), the auxiliary pump (21c, 21d) to supplement power for conveying the heat medium.

7. The air-conditioning apparatus (200) of claim 2, further comprising a heat medium bypass valve (27a, 27b) arranged in parallel to the auxiliary pump (21c, 21d), the heat medium bypass valve (27a, 27b) being opened when the auxiliary pump (21c, 21d) stops and being closed when the auxiliary pump (21c, 21d) operates.

8. The air-conditioning apparatus (100) of claim 2 or 5,
wherein the first heat medium flow regulating device (22, 25) and the second heat medium flow regulating device (23) each comprise at least one valve having three or more flow paths, or at least two valves each having two or more flow paths; or
wherein one of the first heat medium flow regulating device (22, 25) and the second heat medium flow regulating device (23) comprises at least one valve having three or more flow paths or at least one valve having two or more flow paths, and an other one of the first heat medium flow regulating device (22, 25) and the second heat medium flow regulating device (23) comprises at least one valve having three or more flow paths.

9. The air-conditioning apparatus (100) of claim 8, wherein the first heat medium flow regulating device (22, 25) and the second heat medium flow regulating device (23) are integrated together to form the heat medium flow regulating device.

10. The air-conditioning apparatus (100) of any one of claims 1 to 9,
wherein the refrigerant pipe (4) comprises two refrigerant pipes (4), and the outdoor unit (1) and the heat medium relay unit (3) are connected to each other by the two refrigerant pipes (4),
wherein the heat medium pipe (5) comprises four heat medium pipes (5), and the heat medium relay unit (3) and the branch unit (40) are connected each other by the four heat medium pipes (5), and
wherein one or both of heat media cooled or heated by heat exchange with refrigerant in the intermediate heat exchanger (15) are supplied to a plurality of the use-side heat exchangers (26) via the branch unit (40).

## Patentansprüche

1. Klimaanlage (100), umfassend:
eine Außeneinheit (1), aufweisend einen Verdichter (10) und einen wärmequellenseitigen Wärmetauscher (12);
eine Wärmemedium-Relaiseinheit (3), aufweisend einen Zwischenwärmetauscher (15), eine Expansionseinrichtung (16) und eine Pumpe (21a, 21b);
eine Verzweigungseinheit (40), aufweisend eine Wärmemedium-Strömungsregulierungseinrichtung; und
mindestens eine Inneneinheit (2), aufweisend einen nutzungsseitigen Wärmetauscher (26),
wobei der Verdichter (10), der wärmequellenseitige Wärmetauscher (12), die Expansionseinrichtung (16) und ein Kältemittel-Strömungspfad des Zwischenwärmetauschers (15) durch eine Kältemittelleitung (4) verbunden sind, um einen Kältemittelzyklierkreislauf (A) zu bilden, durch den Kältemittel zirkuliert,
wobei ein Wärmemedium-Strömungspfad des Zwischenwärmetauschers (15), die Verzweigungseinheit (40) und der nutzungsseitige Wärmetauscher (26) durch eine Wärmemediumleitung (5) verbunden sind, um einen Wärmemediumzyklierkreislauf (B) zu bilden, durch den ein Wärmemedium zirkuliert, das sich von dem Kältemittel unterscheidet, und
wobei die Außeneinheit (1) und die Wärmemedium-Relaiseinheit (3), die den Kältemittelzyklierkreislauf (A) bilden, in einem von einem klimatisierten Raum (7) getrennten Raum angeordnet sind, als von der Verzweigungseinheit (40) und der mindestens einen Inneneinheit (2) getrennte Komponenten ausgebildet sind, in einem von der Verzweigungseinheit (40) und der mindestens einen Inneneinheit (2) getrennten Raum angeordnet sind,
**gekennzeichnet durch** eine der folgenden Eigenschaften:
- die Außeneinheit (1) und die Wärmemedium-Relaiseinheit (3) sind in einem Raum (6) außerhalb eines Gebäudes angeordnet; oder
- die Wärmemedium-Relaiseinheit (3) ist in einem Innenraum (41) angeordnet, der von jedem klimatisierten Raum (7) und von jedem Raum (8) oberhalb einer Decke eines klimatisierten Raums (7) getrennt ist.

2. Klimaanlage (100) nach Anspruch 1, wobei die Außeneinheit (1) ferner eine erste Kältemittelströmungsschalteinrichtung (11) aufweist;
wobei die Wärmemedium-Relaiseinheit (3) ferner eine zweite Kältemittelströmungsschalteinrichtung (18) umfasst;
wobei die Verzweigungseinheit (40) ferner eine Hilfspumpe (21c, 21d) umfasst;
wobei der Verdichter (10), die erste Kältemittelströmungsschalteinrichtung (11), der wärmequellenseitige Wärmetauscher (12), die Expansionseinrichtung (16), der Kältemittelströmungspfad des Zwischenwärmetauschers (15) und die zweite Kältemittelströmungsschalteinrichtung (18) durch die Kältemittelleitung (4) verbunden sind, um den Kältemittelzyklierkreislauf (A) zu bilden, durch den Kältemittel zirkuliert,
wobei die Wärmemedium-Strömungsregulierungseinrichtung der Verzweigungseinheit (40) mindestens umfasst:
eine erste Wärmemedium-Strömungsregulierungseinrichtung (22, 25), die in einem Strömungspfad angeordnet ist, durch den das Wärmemedium aus dem nutzungsseitigen Wärmetauscher (26) strömt; und
eine zweite Wärmemedium-Strömungsregulierungseinrichtung (23), die in einem Strömungsweg angeordnet ist, durch den das Wärmemedium in den nutzungsseitigen Wärmetauscher (26) strömt,
wobei die Klimaanlage (100) ferner umfasst:
einen Ausströmungstemperatursensor (34), der eingerichtet ist, eine Temperatur des aus dem nutzungsseitigen Wärmetauscher (26) ausströmenden Wärmemediums zu erfassen,
einen Einströmungstemperatursensor (31), der eingerichtet ist, eine Temperatur des in den nutzungsseitigen Wärmetauscher (26) einströmenden Wärmemediums zu erfassen, und
eine Steuereinheit (50), die eingerichtet ist, einen Öffnungsgrad der Wärmemedium-Strömungsregulierungseinrichtung so zu steuern, dass eine Differenz zwischen einem von dem Einströmungstemperatursensor (31) erfassten Wert und einem von dem Ausströmungstemperatursensor (34) erfassten Wert einen vorbestimmten Wert aufweist; und
wobei die Hilfspumpe (21c, 21d) eingerichtet ist, zu arbeiten, wenn eine Temperaturdifferenz zwischen einem von dem Ausströmungstemperatursensor (34) erfassten Wert und einem von dem Einströmungstemperatursensor (31) erfassten Wert größer als der vorbestimmte Wert ist, und eingerichtet ist, anzuhalten, wenn die Temperaturdifferenz kleiner als der vorbestimmte Wert ist.

3. Klimaanlage (100) nach Anspruch 1 oder 2, wobei der Zwischenwärmetauscher (15) eine Struktur aufweist, die verhindert, dass sich das Kältemittel im Kältemittelströmungspfad und das Wärmemedium im Wärmemediumströmungspfad vermischen.

4. Klimaanlage (100) nach einem der Ansprüche 1 bis 3, wobei die Wärmemedium-Strömungsregulierungseinrichtung eingerichtet ist, eine Strömungsrate des dem nutzungsseitigen Wärmetauscher (26) zugeführten Wärmemediums zu regulieren.

5. Klimaanlage (100) nach Anspruch 2,
wobei der Ausströmungstemperatursensor (34) an der Wärmemediumleitung (5) angeordnet ist, die sich zwischen der ersten Wärmemedium-Strömungsregulierungseinrichtung (22, 25) und dem nutzungsseitigen Wärmetauscher (26) und innerhalb der Verzweigungseinheit (40) befindet, und
wobei der Einströmungstemperatursensor (31) an der Wärmemediumleitung (5), die sich zwischen der zweiten Wärmemedium-Strömungsregulierungseinrichtung (23) und dem Zwischenwärmetauscher (15) und innerhalb der Wärmemedium-Relaiseinheit (3) befindet, oder an der Wärmemediumleitung (5), die sich zwischen der zweiten Wärmemedium-Strömungsregulierungseinrichtung (23) und dem nutzungsseitigen Wärmetauscher (26) und innerhalb der Verzweigungseinheit (40) befindet, angeordnet ist.

6. Klimaanlage (200) nach Anspruch 2, wobei die Verzweigungseinheit (40) zusätzlich zu der Pumpe (21a, 21b), die sich innerhalb der Wärmemedium-Relaiseinheit (3) befindet, die Hilfspumpe (21c, 21d) zur Energieversorgung für die Weiterleitung des Wärmemediums enthält.

7. Klimaanlage (200) nach Anspruch 2, ferner umfassend ein parallel zur Hilfspumpe (21c, 21d) angeordnetes Wärmemedium-Bypass-Ventil (27a, 27b), wobei das Wärmemedium-Bypass-Ventil (27a, 27b) geöffnet wird, wenn die Hilfspumpe (21c, 21d) anhält, und geschlossen wird, wenn die Hilfspumpe (21c, 21d) arbeitet.

8. Klimaanlage (100) nach Anspruch 2 oder 5,
wobei die erste Wärmemedium-Strömungsregulierungseinrichtung (22, 25) und die zweite Wärmemedium-Strömungsregulierungseinrichtung (23) jeweils mindestens ein Ventil mit drei oder mehr Strömungspfaden oder mindestens zwei Ventile mit jeweils zwei oder mehr Strömungspfaden umfassen; oder
wobei eine der ersten Wärmemedium-Strömungsregulierungseinrichtung (22, 25) und der zweiten Wärmemedium-Strömungsregulierungseinrichtung (23) mindestens ein Ventil mit drei oder mehr Strömungspfaden oder mindestens ein Ventil mit zwei oder mehr Strömungspfaden umfasst, und eine andere der ersten Wärmemedium-Strömungsregulierungseinrichtung (22, 25) und der zweiten Wärmemedium-Strömungsregulierungseinrichtung (23) mindestens ein Ventil mit drei oder mehr Strömungspfaden umfasst.

9. Klimaanlage (100) nach Anspruch 8, wobei die erste Wärmemedium-Strömungsregulierungseinrichtung (22, 25) und die zweite Wärmemedium-Strömungsregulierungseinrichtung (23)ineinander integriert sind, um die Wärmemedium-Strömungsregulierungseinrichtung zu bilden.

10. Klimaanlage (100) nach einem der Ansprüche 1 bis 9,
wobei die Kältemittelleitung (4) zwei Kältemittelleitungen (4) umfasst, und die Außeneinheit (1) und die Wärmemedium-Relaiseinheit (3) miteinander mit zwei Kältemittelleitungen (4) verbunden sind,
wobei die Wärmemediumleitung (5) vier Wärmemediumleitungen (5) umfasst und die Wärmemedium-Relaiseinheit (3) und die Verzweigungseinheit (40) durch die vier Wärmemediumleitungen (5) miteinander verbunden sind, und
wobei eines oder beide der durch Wärmetausch mit Kältemittel im Zwischenwärmetauscher (15) gekühlten oder erwärmten Wärmemedien über die Verzweigungseinheit (40) einer Vielzahl der nutzungsseitigen Wärmetauscher (26) zugeführt werden.

## Revendications

1. Appareil de climatisation (100), comprenant :
une unité extérieure (1) incluant un compresseur (10) et un échangeur de chaleur côté source de chaleur (12) ;
une unité de relais de fluide thermique (3) incluant un échangeur de chaleur intermédiaire (15), un dispositif d'expansion (16) et une pompe (21a, 21b) ;
une unité de dérivation (40) incluant un dispositif de régulation du débit du fluide thermique ; et
au moins une unité intérieure (2) incluant au moins un échangeur de chaleur côté utilisation (26),
dans lequel le compresseur (10), l'échangeur de chaleur côté source de chaleur (12), le dispositif d'expansion (16) et une voie d'écoulement du réfrigérant de l'échangeur de chaleur intermédiaire (15) sont reliés par un tuyau de réfrigérant (4) pour former un circuit de réfrigérant (A) dans lequel circule le réfrigérant,
dans lequel un chemin d'écoulement du fluide thermique de l'échangeur de chaleur intermédiaire (15), l'unité de dérivation (40) et l'échangeur de chaleur côté utilisation (26) sont reliés par un tuyau de fluide thermique (5) pour former un circuit de cycle de fluide thermique (B) dans lequel circule un fluide thermique différent du réfrigérant, et
dans lequel l'unité extérieure (1) et l'unité de relais de fluide thermique (3) qui forment le circuit de réfrigérant (A) sont disposées dans un espace séparé d'un espace climatisé (7), sont formées en tant que composants séparés de l'unité de dérivation (40) et d'au moins une unité intérieure (2), sont disposées dans un espace séparé de l'unité de dérivation (40) et d'au moins une unité intérieure (2),
**caractérisé par** l'un des éléments suivants :
- l'unité extérieure (1) et l'unité de relais du fluide thermique (3) sont disposées dans un espace (6) à l'extérieur d'un bâtiment ; ou
- l'unité de relais du fluide thermique (3) est disposée dans un espace intérieur (41) séparé de tout espace climatisé (7) et de tout espace (8) situé au-dessus d'un plafond de tout espace climatisé (7).

2. Appareil de climatisation (100) selon la revendication 1, dans lequel l'unité extérieure (1) inclut en outre un premier dispositif de commutation du flux de réfrigérant (11) ;
dans lequel l'unité de relais de fluide thermique (3) inclut en outre un deuxième dispositif de commutation du flux de réfrigérant (18) ;
dans lequel l'unité de dérivation (40) inclut en outre une pompe auxiliaire (21c, 21d) ;
dans lequel le compresseur (10), le premier dispositif de commutation du flux de réfrigérant (11), l'échangeur de chaleur côté source de chaleur (12), le dispositif d'expansion (16), le chemin d'écoulement du réfrigérant de l'échangeur de chaleur intermédiaire (15) et le deuxième dispositif de commutation du flux de réfrigérant (18) sont reliés par le tuyau de réfrigérant (4) pour former le circuit de réfrigérant (A) à travers lequel circule le réfrigérant,
dans lequel le dispositif de régulation du flux de fluide thermique de l'unité de dérivation (40) comprend au moins :
un premier dispositif de régulation du flux du fluide thermique (22, 25) disposé dans un circuit d'écoulement à travers lequel le fluide thermique sort de l'échangeur de chaleur côté utilisation (26) ; et
un second dispositif (23) de régulation du débit du fluide thermique disposé dans un chemin d'écoulement à travers lequel le fluide thermique s'écoule dans l'échangeur de chaleur côté utilisation (26),
dans lequel l'appareil de climatisation (100) comprend en outre :
un capteur de température de flux sortant (34) configuré pour détecter une température du fluide thermique sortant de l'échangeur de chaleur côté utilisation (26),
un capteur de température de flux entrant (31) configuré pour détecter une température du fluide thermique s'écoulant dans l'échangeur de chaleur côté utilisation (26), et
un système de commande (50) configuré pour commander un degré d'ouverture du dispositif de régulation du flux de fluide thermique de sorte qu'une différence entre une valeur détectée par le capteur de température de flux entrant (31) et une valeur détectée par le capteur de température de flux sortant (34) présente une valeur prédéterminée ; et
dans lequel la pompe auxiliaire (21c, 21d) est configurée pour fonctionner lorsqu'une différence de température entre une valeur détectée par le capteur de température de flux sortant (34) et une valeur détectée par le capteur de température de flux entrant (31) est supérieure à la valeur prédéterminée, et est configurée pour s'arrêter lorsque la différence de température est inférieure à la valeur prédéterminée.

3. Appareil de climatisation (100) selon la revendication 1 ou 2, dans lequel l'échangeur de chaleur intermédiaire (15) présente une structure qui empêche le réfrigérant dans le chemin d'écoulement du réfrigérant et le fluide thermique dans le chemin d'écoulement du fluide thermique de se mélanger.

4. Appareil de climatisation (100) selon l'une quelconque des revendications 1 à 3, dans lequel le dispositif de régulation du flux de fluide thermique est configuré pour réguler un débit du fluide thermique fourni à l'échangeur de chaleur côté utilisation (26).

5. Appareil de climatisation (100) selon la revendication 2,
dans lequel le capteur de température de flux sortant (34) est placé sur le tuyau de fluide thermique (5) situé entre le premier dispositif de régulation du flux de fluide thermique (22, 25) et l'échangeur de chaleur côté utilisation (26) et à l'intérieur de l'unité de dérivation (40), et
dans lequel le capteur de température de flux entrant (31) est placé sur le tuyau de fluide thermique (5) situé entre le deuxième dispositif de régulation du flux de fluide thermique (23) et l'échangeur de chaleur intermédiaire (15) et à l'intérieur de l'unité de relais de fluide thermique (3), ou sur le tuyau de fluide thermique (5) situé entre le deuxième dispositif de régulation du flux de fluide thermique (23) et l'échangeur de chaleur côté utilisation (26) et à l'intérieur de l'unité de dérivation (40).

6. Appareil de climatisation (200) selon la revendication 2, dans lequel l'unité de dérivation (40) inclut, en plus de la pompe (21a, 21b) située à l'intérieur de l'unité de relais du fluide thermique (3), la pompe auxiliaire (21c, 21 d) pour compléter la puissance pour le transport du fluide thermique.

7. Appareil de climatisation (200) selon la revendication 2, comprenant en outre une soupape de dérivation du fluide thermique (27a, 27b) disposée en parallèle à la pompe auxiliaire (21c, 21d), la soupape de dérivation du fluide thermique (27a, 27b) étant ouverte lorsque la pompe auxiliaire (21c, 21d) s'arrête et étant fermée lorsque la pompe auxiliaire (21c, 21d) fonctionne.

8. Appareil de climatisation (100) de la revendication 2 ou 5,
dans lequel le premier dispositif de régulation du flux de fluide thermique (22, 25) et le second dispositif de régulation du flux de fluide thermique (23) comprennent chacun au moins une vanne dotée de trois chemins d'écoulement ou plus, ou au moins deux vannes ayant chacune deux chemins d'écoulement ou plus ; ou
dans lequel l'un entre le premier dispositif de régulation du flux de fluide thermique (22, 25) et le second dispositif de régulation du flux de fluide thermique (23) comprend au moins une vanne à trois chemins d'écoulement ou plus ou au moins une vanne à deux chemins d'écoulement ou plus, et un autre entre le premier dispositifs de régulation du flux de fluide thermique (22, 25) et le second dispositif de régulation du flux de fluide thermique (23) comprend au moins une vanne à trois chemins d'écoulement ou plus.

9. Appareil de climatisation (100) selon la revendication 8, dans lequel le premier dispositif de régulation du flux de fluide thermique (22, 25) et le second dispositif de régulation du flux de fluide thermique (23) sont intégrés ensemble pour former le dispositif de régulation du flux de fluide thermique.

10. Appareil de climatisation (100) selon l'une quelconque des revendications 1 à 9,
dans lequel le tuyau de réfrigérant (4) comprend deux tuyaux de réfrigérant (4), et l'unité extérieure (1) et l'unité de relais de fluide thermique (3) sont reliées l'une à l'autre par les deux tuyaux de réfrigérant (4),
dans lequel le tuyau de fluide thermique (5) comprend quatre tuyaux de fluide thermique (5), et l'unité de relais de fluide thermique (3) et l'unité de dérivation (40) sont reliées l'une à l'autre par les quatre tuyaux de fluide thermique (5), et
dans lequel l'un ou les deux fluides thermiques refroidis ou chauffés par un échange de chaleur avec le réfrigérant dans l'échangeur de chaleur intermédiaire (15) sont fournis à une pluralité d'échangeurs de chaleur côté utilisation (26) par l'intermédiaire de l'unité de dérivation (40).
